(19) Europäisches Patentamt / European Patent Office / Office européen des brevets

(11) **EP 4 456 492 A1**

(12) **EUROPEAN PATENT APPLICATION**
published in accordance with Art. 153(4) EPC

(43) Date of publication:
**30.10.2024 Bulletin 2024/44**

(21) Application number: **22911945.8**

(22) Date of filing: **21.12.2022**

(51) International Patent Classification (IPC):
**H04L 27/26** (2006.01)  **H04J 11/00** (2006.01)
**H04J 13/00** (2011.01)  **H04W 56/00** (2009.01)

(52) Cooperative Patent Classification (CPC):
**H04J 11/00; H04J 13/00; H04L 27/26; H04W 56/00**

(86) International application number:
**PCT/KR2022/020993**

(87) International publication number:
**WO 2023/121312 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 KR 20210184148**

(71) Applicant: **Electronics and Telecommunications
Research Institute
Daejeon 34129 (KR)**

(72) Inventors:
• **CHANG, Kapseok**
  **Daejeon 34129 (KR)**
• **KWAK, Byung Jae**
  **Daejeon 34129 (KR)**
• **CHO, Won Cheol**
  **Daejeon 34129 (KR)**
• **KO, Young-Jo**
  **Daejeon 34129 (KR)**
• **KIM, Yong Sun**
  **Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR TRANSMITTING/RECEIVING WIRELESS SIGNAL IN COMMUNICATION SYSTEM**

(57) A method by which a first communication node operates in a communication system comprises the steps of: generating a first sequence and a second sequence; generating a first signal sequence on the basis of the first sequence and the second sequence; and transmitting a first signal generated by modulating the first signal sequence, wherein even-numbered elements and odd-numbered elements of the first signal sequence are classified into a first element group and a second element group, respectively, and any one of the first sequence and the second sequence can be mapped in ascending order in the first element group, and the other one thereof can be mapped in descending order in the second element group.

【FIG. 4】

**Description**

[Technical Field]

The present disclosure relates to a radio signal transmission and reception technique in a communication system, and more particularly, to a technique for improving radio signal transmission and reception performance in a communication system.

[Background Art]

With the development of information and communication technology, various wireless communication technologies are being developed. Representative wireless communication technologies include long term evolution (LTE) and new radio (NR) defined as the 3rd generation partnership project (3GPP) standards. The LTE may be one of 4th generation (4G) wireless communication technologies, and the NR may be one of 5th generation (5G) wireless communication technologies. A wireless communication technology after the 5G wireless communication technology (e.g., the sixth generation (6G) wireless communication technology, etc.) may be referred to as 'beyond-5G (B5G) wireless communication technology'.

In an exemplary embodiment of a communication system, in order to access a radio network, a user may perform serving cell identification after acquiring time/frequency synchronization with the network. Operations such as synchronization acquisition and serving cell identification may be performed based on a synchronization signal. Here, the synchronization signal may correspond to a primary synchronization signal (PSS), a secondary synchronization signal (SSS), or a synchronization signal block (SSB) composed of the PSS and SSS.

In an exemplary embodiment of the communication system, synchronization estimation performance may deteriorate when a carrier frequency offset (CFO), phase noise (PhN), and doppler effect (DE) occurs excessively. In an exemplary embodiment of the communication system, in performing a synchronization estimation operation based on a synchronization signal, a complex multiplication operation may be required for each sample or resource element in which the synchronization signal is transmitted. In the synchronization estimation operation involving such the complex multiplication operations, the required amount of computation (or the amount of computational resources) may be large, and the complexity of the computation may be high. A technique for improving the efficiency and performance of the synchronization estimation operation in the radio communication system may be required.

Matters described as the prior arts are prepared to help understanding of the background of the present disclosure, and may include matters that are not already known to those of ordinary skill in the technology domain to which exemplary embodiments of the present disclosure belong.

[Disclosure]

[Technical Problem]

An objective of the present disclosure for achieving the above-described demand is to provide a method and an apparatus for radio signal transmission and reception that can reduce complexity of operations for a synchronization estimation operation based on radio signals and improve performance of the synchronization estimation operation.

[Technical Solution]

An operation method of a first communication node, according to an exemplary embodiment of the present disclosure for achieving the above-described objective, may comprise: generating a first sequence; generating a second sequence; generating a first signal sequence based on the first sequence and the second sequence; and transmitting a first signal generated by modulating the first signal sequence, wherein even-numbered elements and odd-numbered elements of the first signal sequence are classified as a first element group and a second element group, respectively, one of the first sequence and the second sequence is mapped in ascending order in the first element group, and the other of the first sequence and the second sequence is mapped in descending order in the second element group.

The generating of the second sequence may comprise: generating the second sequence by modifying the first sequence.

The first sequence may be a binary sequence, and the second sequence may be a sequence obtained by performing a replication operation on the first sequence or by performing a polarity inversion operation on the first sequence.

The first sequence may be a complex sequence, and the second sequence may be a sequence obtained by applying at least part of a replication operation, a polarity inversion operation, a conjugate operation, or a complex multiplication operation to the first sequence.

The first signal may be generated to have a real value or a pure imaginary value in time domain.

The generating of the first signal sequence may comprise: mapping elements of the first sequence to the even-numbered elements included in the first element group among the elements of the first signal sequence in ascending order; and mapping elements of the second sequence to the odd-numbered elements included in the second element group among the elements of the first signal sequence in descending order.

The generating of the first signal sequence may comprise: mapping elements of the first sequence to the odd-numbered elements included in the second element group among the elements of the first signal sequence in descending order; and mapping elements of the second sequence to the even-numbered elements included in the first element group among the elements of the first signal sequence in ascending order.

An operation method of a first communication node, according to an exemplary embodiment of the present disclosure for achieving the above-described objective, may comprise: generating a first sequence; generating a second sequence; generating a first signal sequence based on the first sequence and the second sequence; and transmitting a first signal generated by modulating the first signal sequence, wherein even-numbered elements and odd-numbered elements among elements corresponding to a first range in the first signal sequence are classified as a first element group and a second element group, respectively, even-numbered elements and odd-numbered elements among elements corresponding to a second range in the first signal sequence are classified as a third element group and a fourth element group, respectively, the first sequence is mapped in ascending and descending order in the first and fourth element groups, and the second sequence is mapped in ascending and descending order in the third and fourth element groups.

The first sequence may be a complex sequence, and the second sequence may be a sequence obtained by applying at least part of a replication operation, a polarity inversion operation, a conjugate operation, or a complex multiplication operation to the first sequence.

The first sequence may be a complex Zadoff-Chu (ZC) sequence, the first signal may be generated to periodically have a value of 0 for every P elements in time domain, and P may be a natural number greater than 1.

The generating of the first sequence may comprise: generating a third sequence; mapping elements of the third sequence to elements corresponding to a third range among elements constituting the first sequence in ascending order; and mapping elements of the third sequence to elements corresponding to a fourth range among elements constituting the first sequence in descending order, wherein the first signal is generated to periodically have a value of 0 for every P elements in time domain, and P is a natural number greater than 1.

The generating of the first sequence may comprise: mapping elements of the first sequence to elements of the first element group in ascending order; mapping elements of the second sequence to elements of the second element group in ascending order; mapping elements of the second sequence to elements of the third element group in descending order; and mapping elements of the first sequence to elements of the fourth element group in descending order.

The generating of the first sequence may comprise: mapping elements of the first sequence to elements of the first element group in descending order; mapping elements of the second sequence to elements of the second element group in descending order; mapping elements of the second sequence to elements of the third element group in ascending order; and mapping elements of the first sequence to elements of the fourth element group in ascending order.

A first communication node according to an exemplary embodiment of the present disclosure for achieving the above-described objective may comprise a processor, and the processor may cause the first communication to perform: generating a first sequence; generating a second sequence; generating a first signal sequence based on the first sequence and the second sequence; and transmitting a first signal generated by modulating the first signal sequence, wherein even-numbered elements and odd-numbered elements among elements corresponding to a first range in the first signal sequence are classified as a first element group and a second element group, respectively, even-numbered elements and odd-numbered elements among elements corresponding to a second range in the first signal sequence are classified as a third element group and a fourth element group, respectively, the first sequence is mapped in ascending and descending order in the first and fourth element groups, and the second sequence is mapped in ascending and descending order in the third and fourth element groups.

The first sequence may be a complex Zadoff-Chu (ZC) sequence, the first signal may be generated to periodically have a value of 0 for every P elements in time domain, and P may be a natural number greater than 1.

In the generating of the first sequence, the processor may further cause the first communication to perform: generating a third sequence; mapping elements of the third sequence to elements corresponding to a third range among elements constituting the first sequence in ascending order; and mapping elements of the third sequence to elements corresponding to a fourth range among elements constituting the first sequence in descending order, wherein the first signal is generated to periodically have a value of 0 for every P elements in time domain, and P is a natural number greater than 1.

In the generating of the first sequence, the processor may further cause the first communication to perform: mapping elements of the first sequence to elements of the first element group in ascending order; mapping elements of the second sequence to elements of the second element group in ascending order; mapping elements of the second sequence to elements of the third element group in descending order; and mapping elements of the first sequence to elements of the fourth element group in ascending order.

In the generating of the first sequence, the processor may further cause the first communication to perform: mapping elements of the first sequence to elements of the first element group in ascending order; mapping elements of the second sequence to elements of the second element group in descending order; mapping elements of the second sequence to elements of the third element group in ascending order; and mapping elements of the first sequence to elements of the fourth element group in ascending order.

[Advantageous Effects]

According to an exemplary embodiment of a method and an apparatus for radio signal transmission and reception in a communication system, performance of a synchronization estimation operation based on a radio signal transmitted and received between a transmitting node and a receiving node can be improved. A first radio signal according to an exemplary embodiment of the method and apparatus for radio signal transmission and reception in the communication system may be generated based on a Distributed Forward/Reverse Concatenation scheme, a Distributed Half Forward/Reverse Concatenation scheme, a Distributed Full/Half Forward/Reverse Concatenation scheme, or the like. According to the first radio signal generated as describe above, complexity of the synchronization estimation operation can be reduced. The first radio signal according to an exemplary embodiment of the method and apparatus for radio signal transmission and reception in the communication system can support robust time synchronization estimation performance with respect to a high CFO, PhN, DE, and the like.

[Description of Drawings]

FIG. 1 is a conceptual diagram illustrating an exemplary embodiment of a communication system.
FIG. 2 is a block diagram illustrating an exemplary embodiment of a communication node constituting a communication system.
FIG. 3 is a conceptual diagram illustrating an exemplary embodiment of a structure of a radio frame in a communication system.
FIG. 4 is a sequence chart for describing a first exemplary embodiment of a signal transmission and reception method in a communication system.
FIG. 5 is a conceptual diagram for describing a first exemplary embodiment of a radio signal structure in a communication system.
FIG. 6 is a conceptual diagram for describing a first exemplary embodiment of a radio signal generation scheme in a communication system.
FIG. 7 is a conceptual diagram for describing a second exemplary embodiment of a radio signal generation scheme in a communication system.
FIGS. 8A and 8B are conceptual diagrams for describing a second exemplary embodiment of a radio signal generation scheme in a communication system.
FIGS. 9A to 9C are conceptual diagrams for describing exemplary embodiments of the first and second sequences in a communication system.
FIG. 10 is a conceptual diagram for describing a third exemplary embodiment of a radio signal generation scheme in a communication system.

[mode for Invention]

Exemplary embodiments of the present disclosure are disclosed herein. However, specific structural and functional details disclosed herein are merely representative for purposes of describing exemplary embodiments of the present disclosure. Thus, exemplary embodiments of the present disclosure may be embodied in many alternate forms and should not be construed as limited to exemplary embodiments of the present disclosure set forth herein.

Accordingly, while the present disclosure is capable of various modifications and alternative forms, specific exemplary embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular exemplary embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may have the same meaning as a communication network.

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to an access point, radio access station, node B (NB), evolved node B (eNB), base transceiver station, mobile multihop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

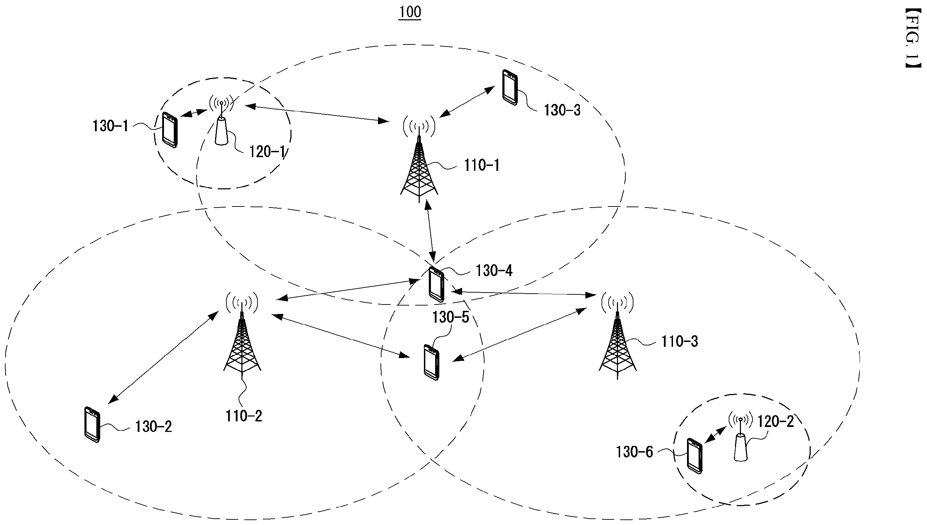

FIG. 1 is a conceptual diagram illustrating an exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4th generation (4G) communication (e.g., long term evolution (LTE), LTE-advanced (LTE-A)), 5th generation (5G) communication (e.g., new radio (NR)), or the like. The 4G communication may be performed in a frequency band of 6 gigahertz (GHz) or below, and the 5G communication may be performed in a frequency band of 6 GHz or above.

For example, for the 4G and 5G communications, the plurality of communication nodes may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like.

In addition, the communication system 100 may further include a core network. When the communication system 100 supports the 4G communication, the core network may comprise a serving gateway (S-GW), a packet data network (PDN) gateway (P-GW), a mobility management entity (MME), and the like. When the communication system 100 supports the 5G communication, the core network may comprise a user plane function (UPF), a session management function (SMF), an access and mobility management function (AMF), and the like.

Meanwhile, each of the plurality of communication nodes 110-1, 110-2, 110-3, 120-1, 120-2, 130-1, 130-2, 130-3, 130- 4, 130-5, and 130-6 constituting the communication system 100 may have the following structure.

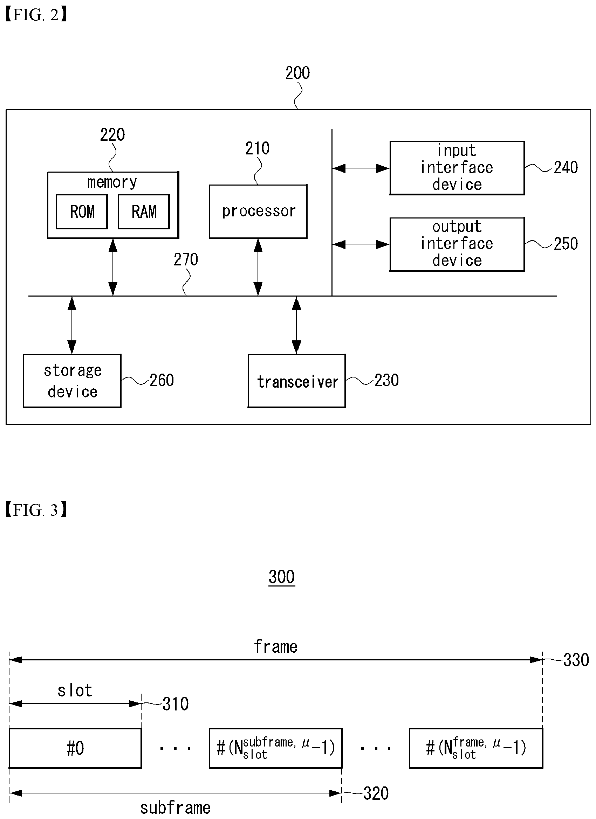

FIG. 2 is a block diagram illustrating an exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, a evolved Node-B (eNB), a base transceiver station (BTS), a radio base station, a radio transceiver, an access point, an access node, a road side unit (RSU), a radio remote head (RRH), a transmission point (TP), a transmission and reception point (TRP), an eNB, a gNB, or the like.

Here, each of the plurality of terminals 130-1, 130-2, 130-3, 130-4, 130-5, and 130-6 may refer to a user equipment (UE), a terminal, an access terminal, a mobile terminal, a station, a subscriber station, a mobile station, a portable subscriber station, a node, a device, an Internet of things (IoT) device, a mounted apparatus (e.g., a mounted module/device/terminal or an on-board device/terminal, etc.), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, radio signal transmission and reception methods in a communication system will be described. Even when a method (e.g., transmission or reception of a data packet) performed at a first communication node among communication nodes is described, the corresponding second communication node may perform a method (e.g., reception or transmission of the data packet) corresponding to the method performed at the first communication node. That is, when an operation of a receiving node is described, a corresponding transmitting node may perform an operation corresponding to the operation of the receiving node. Conversely, when an operation of a transmitting node is described, a corresponding receiving node may perform an operation corresponding to the operation of the transmitting node.

FIG. 3 is a conceptual diagram illustrating an exemplary embodiment of a structure of a radio frame in a communication system.

Referring to FIG. 3, in the communication system, one radio frame may consist of 10 subframes, and one subframe may consist of 2 time slots. One time slot may have a plurality of symbols in the time domain and may include a plurality of subcarriers in the frequency domain. The plurality of symbols in the time domain may be OFDM symbols. For convenience, an exemplary embodiment of a radio frame structure in the communication system will be described below using an OFDM transmission mode in which the plurality of symbols in the time domain are OFDM symbols as an example. However, this is only an example for convenience of description, and exemplary embodiments of the radio frame structure in the communication system are not limited thereto. For example, various exemplary embodiments of the radio frame structure in the communication system may be configured to support other transmission modes, such as a single carrier (SC) transmission mode.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is only an example for convenience of description, and exemplary embodiments of numerologies used in the communication system may not be limited thereto. Each numerology $\mu$ may correspond to information of a subcarrier spacing (SCS) $\Delta f$ and a cyclic prefix (CP). The terminal may identify values of the numerology $\mu$ and CP applied to a downlink bandwidth part or uplink bandwidth part based on higher layer parameters such as *'subcarrierSpacing'* and *'cyclicPrefix''*.

Time resources in which radio signals are transmitted in a communication system 300 may be represented with a frame 320 comprising one or more ( $N_{\text{slot}}^{\text{frame},\mu} / N_{\text{slot}}^{\text{subframe},\mu}$ ) subframes, a subframe 320 comprising one or more ( $N_{\text{slot}}^{\text{subframe},\mu}$ ) slots, and a slot 310 comprising 14 ( $N_{\text{symb}}^{\text{slot}}$ ) OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In an exemplary embodiment of a communication system, the frame 330 may have a length of 10 ms, and the subframe 320 may have a length of 1 ms. Each frame 330 may be divided into two half-frames having the same length, and the first half-frame (i.e., half-frame 0) may be composed of subframes #0 to #4, and the second half-frame (i.e., half-frame 1) may be composed of subframes #5 to #9. One carrier may include a set of frames for uplink (i.e., uplink frames) and a set of frames for downlink (i.e., downlink frames).

One slot may have 6 (i.e., extended cyclic prefix (CP) case) or 7 (i.e., normal CP case) OFDM symbols. A time-frequency region defined by one slot may be referred to as a resource block (RB). When one slot has 7 OFDM symbols, one subframe may have 14 OFDM symbols (i.e., l = 0, 1, 2, ..., 13).

The subframe may be divided into a control region and a data region. A physical downlink control channel (PDCCH) may be allocated to the control region. A physical downlink shared channel (PDSCH) may be allocated to the data region. Some of the subframes may be special subframes. The special subframe may include a downlink pilot time slot (DwPTS), a guard period (GP), and an uplink pilot time slot (UpPTS). The DwPTS may be used for time and frequency synchronization estimation and cell search of the terminal. The GP may be a period for avoiding interferences caused by multipath delays of downlink signals.

In an exemplary embodiment of a communication system, in order to access a radio network, a user may perform serving cell identification after acquiring time/frequency synchronization with the network. Operations such as synchronization acquisition and serving cell identification may be performed based on a synchronization signal. Here, the synchronization signal may correspond to a primary synchronization signal (PSS), a secondary synchronization signal (SSS), or a synchronization signal block (SSB) composed of the PSS and SSS.

In an exemplary embodiment of the communication system, synchronization estimation performance may deteriorate when a carrier frequency offset (CFO), phase noise (PhN), and doppler effect (DE) occurs excessively. In an exemplary embodiment of the communication system, in performing a synchronization estimation operation based on a synchronization signal, a complex multiplication operation may be required for each sample or resource element in which the synchronization signal is transmitted. In the synchronization estimation operation involving such the complex multiplication operations, the required amount of computation (or the amount of computational resources) may be large, and the complexity of the computation may be high. A technique for improving the efficiency and performance of the synchronization estimation operation in the radio communication system may be required.

In an exemplary embodiment of the communication system, a synchronization signal may be configured based on one or more sequences. The one or more sequences constituting the synchronization signal may be arranged in the frame 330, subframe 320, slot 310, or OFDM symbols constituting the slot 310 in the time domain. Meanwhile, the one or more sequences constituting the synchronization signal may be modulated and mapped to a plurality of subcarriers in the frequency domain. In an exemplary embodiment of the communication system, the one or more sequences constituting the synchronization signal may correspond to one or more binary sequences or complex sequences.

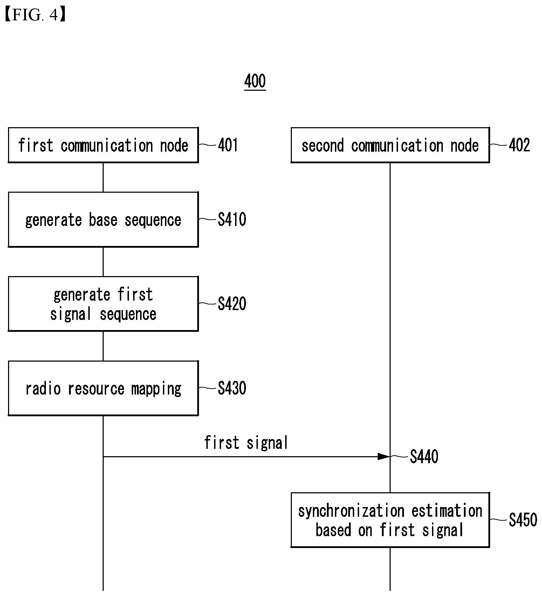

FIG. 4 is a sequence chart for describing a first exemplary embodiment of a signal transmission and reception method in a communication system.

Referring to FIG. 4, a communication system 400 may include a plurality of communication nodes. For example, the communication system 400 may include at least a first communication node 401 and a second communication node 402. The first communication node 401 may be the same as or similar to the cell transmitting the synchronization signal described with reference to FIG. 3. The second communication node 402 may be the same as or similar to the receiving node for receiving the synchronization signal described with reference to FIG. 3. Hereinafter, in describing the exemplary embodiment of the signal transmission and reception method in the communication system with reference to FIG. 4, descriptions overlapping those described with reference to FIGS. 1 to 3 may be omitted.

In an exemplary embodiment of the communication system 400, the first communication node 401 may correspond to a cell, base station, network, or the like. The first communication node 401 may transmit a first signal. Here, the first signal may be used for other communication nodes (e.g., users, UEs, terminals, etc.) within a coverage of the first communication node 401 to acquire synchronization with the first communication node 401. The first signal may be used for other communication nodes within the coverage of the first communication node 401 to estimate identification information (e.g., physical identify (PID), etc.) related to the first communication node 401. The first signal may correspond to a synchronization signal, for example. The first signal may correspond to a PSS or a synchronization signal defined separately from the PSS. However, this is only an example for convenience of description, and the first exemplary embodiment of the signal transmission and reception method in the communication system 400 is not limited thereto. The first signal may be composed of one or more sequences (hereinafter, one or more first signal sequences). The second communication node 402 may receive the first signal transmitted from the first communication node 401. The second communication node 402 may acquire or estimate synchronization with the first communication node 401 based on the received first signal.

Specifically, the first communication node 401 may generate one or more base sequences (S410). The one or more base sequences may correspond to binary sequences or complex sequences. The first communication node 401 may generate one or more first signal sequences based on the one or more base sequences (S420).

The first communication node 401 may modulate the one or more first signal sequences generated in step S420 and allocate (or map) them to a radio resource (S430). For example, the first communication node 401 may modulate the one or more generated first signal sequences to generate one or more modulation symbols. The first communication node 401 may allocate the generated one or more modulation symbols onto a time resource and/or frequency resource.

The first communication node 401 may transmit the first signal composed of the one or more first signal sequences modulated and mapped to the radio resource to the second communication node 402 (S440). In other words, the first communication node 401 may transmit, to the second communication node 402, the first signal composed of the one or more modulation symbols into which the one or more first signal sequences are modulated. In step S440, the first communication node 401 may transmit the first signal in a broadcast scheme. However, this is only an example for convenience of description, and the first exemplary embodiment of the signal transmission/reception method in the communication system 400 is not limited thereto. For example, the first communication node 401 may transmit the first signal in a unicast scheme or a multicast scheme.

The second communication node 402 may receive the first signal transmitted from the first communication node 401 (S440). The second communication node 402 may perform a synchronization estimation operation based on the first signal received in step S440 (S450). In step S450, the second communication node 402 may perform an operation for acquiring time/frequency synchronization with the first communication node 401 based on the first signal. In step S450, the second communication node 402 may obtain information (e.g., PID) of the first communication node 401, which is included in the first signal. The operation in step S450 may be performed, for example, based on a cross-correlation operation based on the received signal.

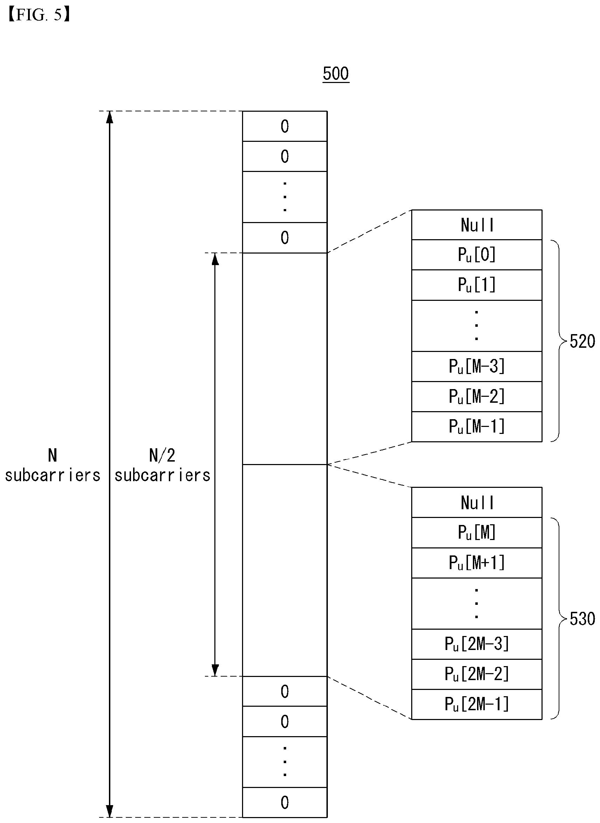

FIG. 5 is a conceptual diagram for describing a first exemplary embodiment of a radio signal structure in a communication system.

Referring to FIG. 5, a communication system may include a plurality of communication nodes. The communication system may be the same as or similar to the communication system 400 described with reference to FIG. 4. Hereinafter, in describing the first exemplary embodiment of the radio signal structure in the communication system with reference to FIG. 5, descriptions overlapping those described with reference to FIGS. 1 to 4 may be omitted.

The first communication node may generate a radio signal, and transmit it to the second communication node. The first communication node may generate one or more radio signals. The first communication node may generate one or more radio signal sequences to generate the one or more radio signals. The first communication node may modulate one or more elements constituting the one or more generated radio signal sequences, and map them to one or more subcarriers in the frequency domain.

In an exemplary embodiment of the communication system, the one or more radio signal sequences may be mapped to 2M subcarriers. An index k for the one or more radio signal sequences may have a natural number greater than or equal to 0 and less than or equal to 2M-1. That is, k may be 0, 1, ..., or 2M-1. The one or more radio signal sequences may be generated based on a predetermined index u. Here, the index u may correspond to a PID index. However, this is only an example for convenience of description, and the first exemplary embodiment of the radio signal structure is not limited thereto. The one or more radio signal sequences may be expressed as $P_u(k)$, for example. Alternatively, the one or more radio signal sequences may be distinguished according to a generation scheme and expressed as $P_{u,1}(k)$, $P_{u,2}(k)$, $P_{u,3}(k)$ and the like. Alternatively, the one or more radio signal sequences may be expressed as $P_u[k]$, $P_{u,1}[k]$, $P_{u,2}[k]$, $P_{u,3}[k]$, and the like.

In an exemplary embodiment of the communication system, a first radio signal may correspond to the first signal described with reference to FIG. 4. The first radio signal may correspond to a synchronization signal, PSS, or the like. Alternatively, the first radio signal may correspond to a signal newly defined for synchronization estimation.

In an exemplary embodiment of the communication system, the radio signal sequence $P_u(k)$ may be generated based on two binary sequences. The radio signal sequence $P_u(k)$ may be composed of 2M elements (i.e., $P_u(0)$, $P_u(1)$, ..., $P_u(2M - 1)$). The radio signal sequence $P_u(k)$ may be modulated and mapped to 2M subcarriers. That is, FIG. 5 shows a case in which the radio signal sequence $P_u(k)$ is modulated and mapped to a plurality of subcarriers. However, this is only an example for convenience of description, and the first exemplary embodiment of the radio signal structure in the communication system is not limited thereto.

In an exemplary embodiment of a first radio signal structure 500, the radio signal sequence $P_u(k)$ may be modulated and mapped to 2M subcarriers represented by the index k (k=0, 1, ..., 2M-1). The 2M elements (i.e., $P_u(0)$, $P_u(1)$, ..., $P_u(2M - 1)$) constituting the radio signal sequence Pu(k) may be mapped to subcarriers having corresponding indexes, respectively. Here, the 2M subcarriers to which the radio signal sequence $P_u(k)$ is mapped (i.e., 2M subcarriers to which modulation symbols obtained by modulating the radio signal sequence $P_u(k)$ are mapped) may be included in a first subcarrier group. The 2M subcarriers constituting the first subcarrier group may be adjacent to or spaced apart from each other in the frequency domain. FIG. 5 shows a case in which at least some of the 2M subcarriers constituting the first subcarrier group are arranged adjacent to each other, but this is only an example for convenience of description and the first exemplary embodiment of the radio signal structure in the communication system is not limited thereto. For example, the first subcarrier group may be composed of 2M subcarriers spaced apart from each other. In other words, the first subcarrier group may be composed of 2M subcarriers that are not adjacent to each other.

One or more null subcarriers may be arranged around the 2M subcarriers constituting the first subcarrier group or between the 2M subcarriers. No signal may not be loaded on the null subcarrier. In other words, a modulation symbol may not be allocated to the null subcarrier. The null subcarrier may have a value of 0. The null subcarrier may correspond to a gap subcarrier, a direct current (DC) subcarrier, or the like. The null subcarrier may be arranged to easily identify the respective subcarriers.

The null subcarrier may be arranged at a front end and/or rear end of the first subcarrier group in the frequency domain. For example, the null subcarrier may be arrange at a front end of a subcarrier corresponding to the subcarrier index 0 and/or at a rear end of a subcarrier corresponding to the subcarrier index 2M-1. In addition, one or more null subcarriers may be arranged between the 2M subcarriers constituting the first subcarrier group. For example, the null subcarrier may be arranged at a front end and/or rear end of one or more central subcarriers (hereinafter referred to as 'center subcarriers') among the 2M subcarriers constituting the first subcarrier group. Alternatively, the first subcarrier group may be divided into a plurality of subgroups each including one or more subcarriers. The null subcarrier may be arranged at a front and/or rear end of each subgroup.

In an exemplary embodiment of the first radio signal structure 500, the radio signal sequence $P_u(k)$ may be modulated and mapped to a second subcarrier group 520 and a third subcarrier group 530 each consisting of M subcarriers. The null subcarriers may be arranged at front ends and/or rear ends of the second subcarrier group 520 and the third subcarrier group 530 in the frequency domain. For example, the null subcarriers may be arranged at all or some of a front end of the subcarrier corresponding to the index 0, a rear end of the subcarrier corresponding to the index M-1, a front end of a subcarrier corresponding to the index M, or rear end of the subcarrier corresponding to index 2M-1.

In an exemplary embodiment of the first radio signal structure 500, the second subcarrier group 520 and the third subcarrier group 530 may be arranged based on one subcarrier (hereinafter, 'first reference subcarrier'). For example, the second subcarrier group 520 may be regarded as being arranged at a front end of the first reference subcarrier, and the third subcarrier group 530 may be regarded as being arranged at a rear end of the first reference subcarrier. In other words, the first reference subcarrier may be regarded as being arranged at a center of the second subcarrier group 520 and the third subcarrier group 530. In this case, the first reference subcarrier may be referred to as 'center subcarrier'.

In an exemplary embodiment of the first radio signal structure 500, the second subcarrier group 520 and the third subcarrier group 530 may be regarded as corresponding to subgroups constituting the first subcarrier group. The first subcarrier group may be configured to further include the first reference subcarrier arranged between the second subcarrier group 520 and the third subcarrier group 530. In this case, the first subcarrier group may include 2M+1 subcarriers. On the other hand, the first subcarrier group may be configured to further include the first reference subcarrier and a second reference subcarrier which is a null subcarrier arranged at a front end of the second subcarrier group. In this case, the first subcarrier group may include 2M+2 subcarriers. On the other hand, the first subcarrier group may be configured not to include the first and second reference subcarriers. In this case, the first subcarrier group may include 2M subcarriers.

In an exemplary embodiment of the first radio signal structure 500, a frequency domain signal loaded on the subcarriers may be transformed into a time domain signal based on an N-point inverse fast Fourier transform (IFFT) scheme. In the N-point IFFT scheme, a radio signal loaded on N subcarriers in the frequency domain may be transformed into a signal in the time domain. The natural number N may be greater than or equal to 2M, which is the number of subcarriers included in the second subcarrier group 520 and the third subcarrier group 530. The remaining subcarriers (e.g., N-2M subcarriers) excluding the 2M subcarriers included in the second subcarrier group 520 and the third subcarrier group 530 among the N subcarriers may have a value of 0 or may correspond to null subcarriers.

In an exemplary embodiment of the first radio signal structure 500, the first subcarrier group may be arranged in a center among the N subcarriers. The number of subcarriers included in the first subcarrier group may be 2M, 2M+1 or 2M+2. The number of subcarriers included in the first subcarrier group may be N/2. 'N/2=2M+2' may be established. For example, N=256 and M=63. However, this is only an example for convenience of description, and the first exemplary embodiment of the radio signal structure is not limited thereto.

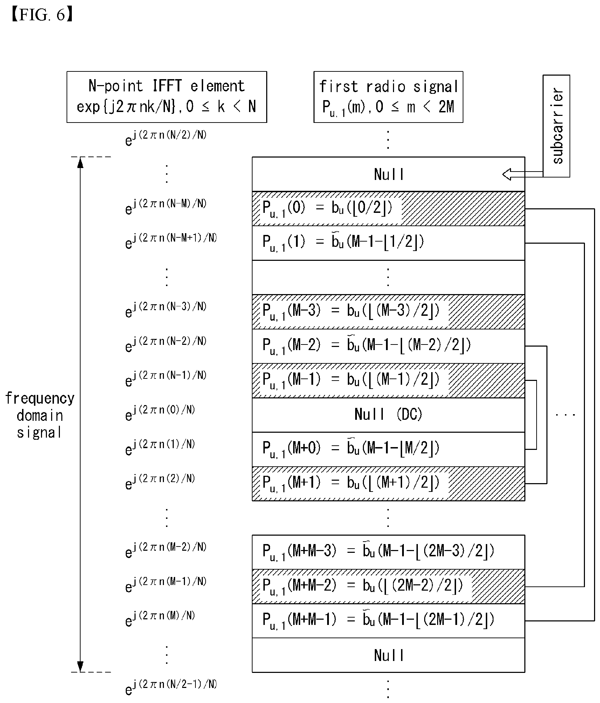

FIG. 6 is a conceptual diagram for describing a first exemplary embodiment of a radio signal generation scheme in a communication system.

Referring to FIG. 6, a communication system may include a plurality of communication nodes. The communication system may be the same as or similar to the communication system 400 described with reference to FIG. 4. Hereinafter, in describing the first exemplary embodiment of the radio signal generation scheme in the communication system with reference to FIG. 6, descriptions overlapping those described with reference to FIGS. 1 to 5 may be omitted.

**First exemplary embodiment of radio signal generation scheme**

In an exemplary embodiment of the communication system, the first communication node may generate a radio signal according to the first exemplary embodiment of the radio signal generations scheme. The first exemplary embodiment of the radio signal generation scheme may be referred to as 'Distributed Forward/Reverse Concatenation (DFRC) scheme'.

In the first exemplary embodiment of the radio signal generation scheme, a first radio signal may be generated based on the same or similar radio signal structure as the first exemplary embodiment of the radio signal structure described with reference to FIG. 5. The first radio signal may be generated based on one or more first radio signal sequences. The one or more first radio signal sequences may be generated based on one or more base sequences. In other words, the one or more first radio signal sequences may correspond to a result obtained by transforming the one or more base sequences according to the first exemplary embodiment of the radio signal generation scheme. The one or more base sequences may correspond to binary sequences, pseudo-noise (PN) sequences, binary PN sequences, or m-sequences. The one or more base sequences may be configured as gold sequences generated through an element-wise exclusive-OR (XOR) operation on two different PN sequences. Alternatively, the one or more base sequences may correspond to complex sequences.

In an exemplary embodiment of the communication system, the first radio signal sequence may be denoted as $P_{u,1}$, $P_{u,1}(k)$, $P_{u,1}[k]$, and the like. Here, $u$ may correspond to first identification information (e.g., PID) related to the first communication node. Meanwhile, k may mean indexes of subcarriers to which the first radio signal sequence $P_{u,1}(k)$ is modulated and mapped. Similarly to the description with reference to FIG. 5, k may have a natural number greater than or equal to 0 and less than 2M. That is, it may be defined as '$k$ = 0, 1, ..., 2M-1'. Alternatively, it may be defined as '$k$ = 0, 1, ..., 2M'. M may correspond to the length of a base sequence bu.

The first radio signal sequence $P_{u,1}$ may be generated based on the base sequence $b_u$ and a modified sequence $b'_u$ generated based on the base sequence. The modified sequence $b'_u$ may be expressed as $\tilde{b}_u$. In the present disclosure, $b'_u$ and $\tilde{b}_u$ corresponding to a notation of the modified sequence may be regarded as the same. The length of the modified sequence may be equal to or similar to the length of the base sequence. The first radio signal sequence may be defined based on the base sequence and the modified sequence identically or similarly to Equation 1.

[Equation 1]

$$P_{u,1}[m] = \begin{cases} b_u[\lfloor m/2 \rfloor], & \text{for even } m \text{ in range of } 0 \le m < 2M \\ \tilde{b}_u[M - 1 - \lfloor m/2 \rfloor], & \text{for odd } m \text{ in range of } 0 \le m < 2M \end{cases}$$

Referring to Equation 1, $\lfloor W \rfloor$ may mean the greatest integer smaller than a real number $W$. The base sequence $b_u$ may constitute even-numbered elements of the first radio signal sequence $P_{u,1}[m]$ The modification sequence $b'_u$ may constitute odd-numbered elements of the first radio signal sequence $P_{u,1}[m]$. In other words, the elements constituting the first radio signal sequence $P_{u,1}[m]$ may be divided into an element group #1 and an element group #2. Here, the base sequence $b_u$ may constitute the element group #1, and the modified sequence $b'_u$ may constitute the element group #2. Here, the element group #1 may include the even-numbered elements of the first radio signal sequence $P_{u,1}[m]$, and the element group #2 may include the odd-numbered elements of the first radio signal sequence $P_{u,1}[m]$. However, this is only an example for convenience of description, and the first exemplary embodiment of the radio signal generation scheme is not limited thereto. For example, the element group #1 may include the odd-numbered elements of the first radio signal sequence $P_{u,1}[m]$, and the element group #2 may include the even-numbered elements of the first radio signal sequence $P_{u,1}[m]$.

In Equation 1, the element group #1 (or even-numbered elements) of the first radio signal sequence $P_{u,1}[m]$ may be configured as a result (e.g., $b_u[\lfloor m/2 \rfloor]$ ) obtained by mapping elements of the base sequence $b_u$ in ascending order. In this case, $P_{u,1}(0) = b_u(0)$, $P_{u,1}(2) = b_u(1)$, and $P_{u,1}(2M - 2) = b_u(M - 1)$. On the other hand, the element group #2 (or odd-numbered elements) of the first radio signal sequence $P_{u,1}[m]$ may be configured as a result (e.g., $\tilde{b}_u[M - 1 - \lfloor m/2 \rfloor]$ ) obtained by mapping elements of the modified sequence $b'_u$ in descending order. In this case, $P_{u,1}(1) = b'_u(M - 1)$, $P_{u,1}(3) = b'_u(M - 2)$, and $P_{u,1}(M - 1) = b'_u(0)$.

The first radio signal sequence $P_{u,1}[m]$ may be transformed into a time domain signal $p_{u,1}[n]$ based on an N-point IFFT operation. Here, $n$ may mean an index of a time domain sample, and may correspond to an integer greater than or equal to 0 and less than N. The N-point IFFT operation may be performed based on elements $exp\{j2\pi nk/N\}$ (i.e., $e^{j2\pi nk/N}$). Here, $k$ may correspond to an index of a subcarrier corresponding to each element. When M is an odd number, the time domain signal $P_{u,1}[n]$ may be determined identically or similarly to Equation 2.

[Equation 2]

$$p_{u,1}[n] = \sum_{\substack{m=0 \\ \text{even } m}}^{M-1} \left\{ P_{u,1}[m]e^{-j\frac{2\pi(M-m)n}{N}} + P_{u,1}[2M-1-m]e^{j\frac{2\pi(M-m)n}{N}} \right\}$$

$$+ \sum_{\substack{m=1 \\ \text{odd } m}}^{M-2} \left\{ P_{u,1}[M+m]e^{j\frac{2\pi(m+1)n}{N}} + P_{u,1}[M-1-m]e^{-j\frac{2\pi(m+1)n}{N}} \right\}$$

$$p_{u,1}[n] = \sum_{\substack{m=0 \\ \text{even } m}}^{M-1} \left\{ b_u\left[\left[\frac{m}{2}\right]\right]e^{-j\frac{2\pi(M-m)n}{N}} + \tilde{b}_u\left[\left[\frac{m}{2}\right]\right]e^{j\frac{2\pi(M-m)n}{N}} \right\}$$

$$+ \sum_{\substack{m=1 \\ \text{odd } m}}^{M-2} \left\{ b_u\left[\left[\frac{M+m}{2}\right]\right]e^{j\frac{2\pi(m+1)n}{N}} + \tilde{b}_u\left[\left[\frac{M+m}{2}\right]\right]e^{-j\frac{2\pi(m+1)n}{N}} \right\}$$

$$p_{u,1}[n] = \sum_{\substack{m=0 \\ \text{even } m}}^{M-1} \left\{ \begin{array}{l} \left(b_u\left[\left[\frac{m}{2}\right]\right] + \tilde{b}_u\left[\left[\frac{m}{2}\right]\right]\right)\cos\left(\frac{2\pi(M-m)n}{N}\right) \\ -j\left(b_u\left[\left[\frac{m}{2}\right]\right] - \tilde{b}_u\left[\left[\frac{m}{2}\right]\right]\right)\sin\left(\frac{2\pi(M-m)n}{N}\right) \end{array} \right\}$$

$$+ \sum_{\substack{m=1 \\ \text{odd } m}}^{M-2} \left\{ \begin{array}{l} \left(b_u\left[\left[\frac{M+m}{2}\right]\right] + \tilde{b}_u\left[\left[\frac{M+m}{2}\right]\right]\right)\cos\left(\frac{2\pi(M-m)n}{N}\right) \\ +j\left(b_u\left[\left[\frac{M+m}{2}\right]\right] - \tilde{b}_u\left[\left[\frac{M+m}{2}\right]\right]\right)\sin\left(\frac{2\pi(M-m)n}{N}\right) \end{array} \right\}$$

Exemplary embodiments of the first radio signal (or time domain signal $P_{u,1}[n]$ of the first radio signal) may be classified into various cases according to a generation scheme of the base sequence $b_u$ and the modified sequence $b'_u$. The cases of the first radio signal classified according to the generation scheme of the base sequence $b_u$ and the modified sequence $b'_u$ may be the same as or similar to those shown in Table 4.

[Table 4]

| Number | Base sequence $b_u[\cdot]$ | Modified sequence $\tilde{b}_u[\cdot]$ |
|---|---|---|
| #1-1 | Binary sequence | $\tilde{b}u[\cdot] = -b_u[\cdot]$ |
| #1-2 | Binary sequence | $\tilde{b}u[\cdot] = b_u[\cdot]$ |
| #1-3 | Complex sequence | $\tilde{b}_u[\cdot] = -b_{u,I}[\cdot] - jb_{u,Q}[\cdot] = -b_u[\cdot]$ |
| #1-4 | Complex sequence | $\tilde{b}_u[\cdot] = b_{u,I}[\cdot] + jb_{u,Q}[\cdot] = b_u[\cdot]$ |
| #1-5 | Complex sequence | $\tilde{b}_u[\cdot] = b_{u,I}[\cdot] - jb_{u,Q}[\cdot] = b_u^*[\cdot]$ |
| #1-6 | Complex sequence | $\tilde{b}_u[\cdot] = -b_{u,I}[\cdot] + jb_{u,Q}[\cdot] = -b_u^*[\cdot]$ |
| #1-7 | Complex sequence | $\tilde{b}_u[\cdot] = -b_{u,Q}[\cdot] - jb_{u,I}[\cdot] = -jb^*_u[\cdot]$ |
| #1-8 | Complex sequence | $\tilde{b}_u[\cdot] = b_{u,Q}[\cdot] + jb_{u,I}[\cdot] = jb^*_u[\cdot]$ |
| #1-9 | Complex sequence | $\tilde{b}_u[\cdot] = b_{u,Q}[\cdot] + jb_{u,I}[\cdot] = jb_u[\cdot]$ |

(continued)

| Number | Base sequence $b_u[\cdot]$ | Modified sequence $\tilde{b}_u[\cdot]$ |
|---|---|---|
| #1-10 | Complex sequence | $\tilde{b}_u[\cdot] = b_{u,Q}[\cdot] - jb_{u,I}[\cdot] = -jb_u[\cdot]$ |

In Table 4, $b_{u,I}$ may correspond to real components of the base sequence $b_u$, which is a complex sequence, and $b_{u,Q}$ may correspond to imaginary components of the base sequence $b_u$. When the base sequence $b_u$ is a binary sequence, the modified sequence $b'_u$ may be generated based on a replication operation or a polarity inversion operation on the base sequence $b_u$. When the base sequence $b_u$ is a complex sequence, the modified sequence $b'_u$ may be generated based on at least part of a replication operation, a polarity inversion operation, a conjugate operation, or a complex multiplication operation for the base sequence $b_u$. Table 4 is only an example for convenience of description, and the first exemplary embodiment of the radio signal generation scheme is not limited thereto.

**Case #1-1:** The base sequence $b_u$ may be a binary sequence. The modified sequence $b'_u$ may correspond to a result obtained by performing a polarity inversion operation on the base sequence $b_u$ (i.e., $b'_u = -b_u$). In this case, the time domain signal $p_{u,1}[n]$ may be expressed identically or similarly to Equation 3.

[Equation 3]

$$p_{u,1}[n] = \sum_{\substack{m=0 \\ \text{even } m}}^{M-1} \left\{ -j \left( 2b_u \left[ \left[ \frac{m}{2} \right] \right] \right) \sin \left( \frac{2\pi(M-m)n}{N} \right) \right\}$$

$$+ \sum_{\substack{m=1 \\ \text{odd } m}}^{M-2} \left\{ j \left( 2b_u \left[ \left[ \frac{M+m}{2} \right] \right] \right) \sin \left( \frac{2\pi(M-m)n}{N} \right) \right\}$$

The time domain signal $p_{u,1}[n]$ expressed as in Equation 3 may have elements in form or imaginary numbers for all $n$. Due to this, estimation complexity at a receiving node may be reduced by half (or more). The first radio signal according to Case #1-1 can support robust time synchronization estimation performance with respect to a high CFO, PhN, DE, and the like.

**Case #1-2**: The base sequence $b_u$ may be a binary sequence. The modified sequence $b'_u$ may be generated identically to the base sequence $b_u$ (i.e., $b'_u = b_u$). In this case, the time domain signal $P_{u,1}[n]$ may be expressed identically or similarly to Equation 4.

[Equation 4]

$$p_{u,1}[n] = \sum_{\substack{m=0 \\ \text{even } m}}^{M-1} \left\{ \left( 2b_u \left[ \left[ \frac{m}{2} \right] \right] \right) \cos \left( \frac{2\pi(M-m)n}{N} \right) \right\}$$

$$+ \sum_{\substack{m=1 \\ \text{odd } m}}^{M-2} \left\{ \left( 2b_u \left[ \left[ \frac{M+m}{2} \right] \right] \right) \cos \left( \frac{2\pi(M-m)n}{N} \right) \right\}$$

The time-domain signal $p_{u,1}[n]$ expressed as in Equation 4 may have elements in form of real numbers for all n. Due to this, estimation complexity at a receiving node may be reduced by half (or more). The first radio signal according to Case #1-2 can support robust time synchronization estimation performance with respect to a high CFO, PhN, DE, and the like.

**Case #1-3**: The base sequence $b_u$ may be a complex sequence. The modified sequence $b'_u$ may correspond to a result obtained by performing a polarity inversion operation on the base sequence $b_u$ (i.e., $b'_u = -b_u$). In this case, the time domain signal $P_{u,1}[n]$ may be expressed identically or similarly to Equation 5.

[Equation 5]

$$p_{u,1}[n] = \sum_{\substack{m=0 \\ \text{even } m}}^{M-1} \left\{ 2\left( b_{u,Q}\left[\!\left[\frac{m}{2}\right]\!\right] - jb_{u,I}\left[\!\left[\frac{m}{2}\right]\!\right] \right) \sin\left(\frac{2\pi(M-m)n}{N}\right) \right\}$$

$$+ \sum_{\substack{m=1 \\ \text{odd } m}}^{M-2} \left\{ 2\left( -b_{u,Q}\left[\!\left[\frac{M+m}{2}\right]\!\right] \right. \right.$$

$$\left. \left. + jb_{u,I}\left[\!\left[\frac{M+m}{2}\right]\!\right] \right) \sin\left(\frac{2\pi(M-m)n}{N}\right) \right\}$$

The time-domain signal $p_{u,1}[n]$ expressed as in Equation 5 may have elements in form of complex numbers for all $n$. The first radio signal according to Case #1-3 can support robust time synchronization estimation performance with respect to a high CFO, PhN, DE, and the like.

**Case #1-4**: The base sequence $b_u$ may be a complex sequence. The modified sequence $b'_u$ may be generated identically to the base sequence $b_u$ (i.e., $b'_u = b_u$ ). In this case, the time domain signal $p_{u,1}[n]$ may be expressed identically or similarly to Equation 6.

[Equation 6]

$$p_{u,1}[n] = \sum_{\substack{m=0 \\ \text{even } m}}^{M-1} \left\{ \left( 2b_{u,I}\left[\!\left[\frac{m}{2}\right]\!\right] + j2b_{u,Q}\left[\!\left[\frac{m}{2}\right]\!\right] \right) \cos\left(\frac{2\pi(M-m)n}{N}\right) \right\}$$

$$+ \sum_{\substack{m=1 \\ \text{odd } m}}^{M-2} \left\{ \left( 2b_{u,I}\left[\!\left[\frac{M+m}{2}\right]\!\right] \right. \right.$$

$$\left. \left. + j2b_{u,Q}\left[\!\left[\frac{M+m}{2}\right]\!\right] \right) \cos\left(\frac{2\pi(M-m)n}{N}\right) \right\}$$

The time-domain signal $p_{u,1}[n]$ expressed as in Equation 6 may have elements in form of complex numbers for all $n$. The first radio signal according to Case #1-4 can support robust time synchronization estimation performance with respect to a high CFO, PhN, DE, and the like.

**Case #1-5**: The base sequence $b_u$ may be a complex sequence. The modified sequence $b'_u$ may correspond

to a result obtained by performing a conjugate operation on the base sequence $b_u$ (i.e., $b'_u = b_u^*$ ). In other words, the modified sequence $b'_u$ may be generated as a complex conjugate of the base sequence $b_u$. In this case, the time domain signal $p_{u,1}[n]$ may be expressed identically or similarly to Equation 7.

[Equation 7]

$$p_{u,1}[n] = \sum_{\substack{m=0 \\ \text{even } m}}^{M-1} \left\{ \begin{array}{l} \left(2b_{u,I}\left[\left[\frac{m}{2}\right]\right]\right)\cos\left(\frac{2\pi(M-m)n}{N}\right) \\ + \left(2b_{u,Q}\left[\left[\frac{m}{2}\right]\right]\right)\sin\left(\frac{2\pi(M-m)n}{N}\right) \end{array} \right\}$$
$$+ \sum_{\substack{m=1 \\ \text{odd } m}}^{M-2} \left\{ \begin{array}{l} \left(2b_{u,I}\left[\left[\frac{M+m}{2}\right]\right]\right)\cos\left(\frac{2\pi(M-m)n}{N}\right) \\ - \left(2b_{u,Q}\left[\left[\frac{M+m}{2}\right]\right]\right)\sin\left(\frac{2\pi(M-m)n}{N}\right) \end{array} \right\}$$

The time-domain signal $p_{u,1}[n]$ expressed as in Equation 7 may have elements in form of real numbers for all $n$. Due to this, estimation complexity at a receiving node may be reduced by half (or more). The first radio signal according to Case #1-5 can support robust time synchronization estimation performance with respect to a high CFO, PhN, DE, and the like.

**Case #1-6**: The base sequence $b_u$ may be a complex sequence. The modified sequence $b'_u$ may correspond to a result obtained by performing a polarity inversion operation on a complex conjugate of the base sequence $b_u$ (i.e., $b'_u = -b_u^*$ ). In this case, the time domain signal pu, 1[n] may be expressed identically or similarly to Equation 8.

[Equation 8]

$$p_{u,1}[n] = \sum_{\substack{m=0 \\ \text{even } m}}^{M-1} \left\{ \begin{array}{l} j\left(2b_{u,Q}\left[\left[\frac{m}{2}\right]\right]\right)\cos\left(\frac{2\pi(M-m)n}{N}\right) \\ -j\left(2b_{u,I}\left[\left[\frac{m}{2}\right]\right]\right)\sin\left(\frac{2\pi(M-m)n}{N}\right) \end{array} \right\}$$
$$+ \sum_{\substack{m=1 \\ \text{odd } m}}^{M-2} \left\{ \begin{array}{l} j\left(2b_{u,Q}\left[\left[\frac{M+m}{2}\right]\right]\right)\cos\left(\frac{2\pi(M-m)n}{N}\right) \\ -j\left(2b_{u,I}\left[\left[\frac{M+m}{2}\right]\right]\right)\sin\left(\frac{2\pi(M-m)n}{N}\right) \end{array} \right\}$$

The time domain signal $p_{u,1}[n]$ expressed as in Equation 8 may have elements in form of imaginary numbers for all $n$. Due to this, estimation complexity at a receiving node may be reduced by half (or more). The first radio signal according to Case #1-6 can support robust time synchronization estimation performance with respect to a high CFO, PhN, DE, and the like.

**Case #1-7:** The base sequence $b_u$ may be a complex sequence. The modified sequence $b'_u$ may correspond to a result obtained by performing a polarity inversion operation and a multiplication operation of an imaginary number j on a complex conjugate of the base sequence $b_u$ (i.e., $b'_u = -jb_u^*$ ). In this case, the time domain signal $P_{u,1}[n]$ may be expressed identically or similarly to Equation 9.

[Equation 9]

$$p_{u,1}[n]$$

$$= \sum_{\substack{m=0 \\ \text{even } m}}^{M-1} \left\{ \begin{array}{l} \left( b_{u,I}\left[\left[\frac{m}{2}\right]\right] - b_{u,Q}\left[\left[\frac{m}{2}\right]\right] \right)(1-j)\cos\left(\frac{2\pi(M-m)n}{N}\right) \\ \left( b_{u,I}\left[\left[\frac{m}{2}\right]\right] + b_{u,Q}\left[\left[\frac{m}{2}\right]\right] \right)(1-j)\sin\left(\frac{2\pi(M-m)n}{N}\right) \end{array} \right\}$$

$$+ \sum_{\substack{m=1 \\ \text{odd } m}}^{M-2} \left\{ \begin{array}{l} \left( b_{u,I}\left[\left[\frac{M+m}{2}\right]\right] - b_{u,Q}\left[\left[\frac{M+m}{2}\right]\right] \right)(1-j)\cos\left(\frac{2\pi(M-m)n}{N}\right) \\ -\left( b_{u,I}\left[\left[\frac{M+m}{2}\right]\right] + b_{u,Q}\left[\left[\frac{M+m}{2}\right]\right] \right)(1-j)\sin\left(\frac{2\pi(M-m)n}{N}\right) \end{array} \right\}$$

The time-domain signal $p_{u,1}[n]$ expressed as in Equation 9 may have elements in form of complex numbers for all $n$. The first radio signal according to Case #1-7 can support robust time synchronization estimation performance with respect to a high CFO, PhN, DE, and the like.

**Case #1-8**: The base sequence $b_u$ may be a complex sequence. The modified sequence $b'_u$ may correspond to a result obtained by performing a multiplication operation of an imaginary number j on a complex conjugate of the base sequence $b_u$ (i.e., $b'_u = jb_u^*$ $b'_u$ In this case, the time domain signal $p_{u,1}[n]$ may be expressed identically or similarly to Equation 10. $b_u^*$

[Equation 10]

$$p_{u,1}[n]$$

$$= \sum_{\substack{m=0 \\ \text{even } m}}^{M-1} \left\{ \begin{array}{l} \left( b_{u,I}\left[\left[\frac{m}{2}\right]\right] + b_{u,Q}\left[\left[\frac{m}{2}\right]\right] \right)(1+j)\cos\left(\frac{2\pi(M-m)n}{N}\right) \\ -\left( b_{u,I}\left[\left[\frac{m}{2}\right]\right] - b_{u,Q}\left[\left[\frac{m}{2}\right]\right] \right)(1+j)\sin\left(\frac{2\pi(M-m)n}{N}\right) \end{array} \right\}$$

$$+ \sum_{\substack{m=1 \\ \text{odd } m}}^{M-2} \left\{ \begin{array}{l} \left( b_{u,I}\left[\left[\frac{M+m}{2}\right]\right] + b_{u,Q}\left[\left[\frac{M+m}{2}\right]\right] \right)(1+j)\cos\left(\frac{2\pi(M-m)n}{N}\right) \\ \left( b_{u,I}\left[\left[\frac{M+m}{2}\right]\right] - b_{u,Q}\left[\left[\frac{M+m}{2}\right]\right] \right)(1+j)\sin\left(\frac{2\pi(M-m)n}{N}\right) \end{array} \right\}$$

The time-domain signal $p_{u,1}[n]$ expressed as in Equation 10 may have elements in form of complex numbers for all $n$. The first radio signal according to Case #1-8 can support robust time synchronization estimation performance with respect to a high CFO, PhN, DE, and the like.

**Case #1-9**: The base sequence $b_u$ may be a complex sequence. The modified sequence $b'_u$ may correspond to a result obtained by performing a multiplication operation of an imaginary number j on the base sequence $b_u$ (i.e., $b'_u = jb_u$). In this case, the time domain signal $P_{u,1}[n]$ may be expressed identically or similarly to Equation 11.

[Equation 11]

$$p_{u,1}[n] = \sum_{\substack{m=0 \\ \text{even } m}}^{M-1} \left\{ \left( \left( b_{u,I}\left[\left[\frac{m}{2}\right]\right] - b_{u,Q}\left[\left[\frac{m}{2}\right]\right] \right) + j\left( b_{u,I}\left[\left[\frac{m}{2}\right]\right] + b_{u,Q}\left[\left[\frac{m}{2}\right]\right] \right) \right) \right.$$
$$\left. + \left[ \cos\left(\frac{2\pi(M-m)n}{N}\right) - \sin\left(\frac{2\pi(M-m)n}{N}\right) \right] \right\}$$
$$+ \sum_{\substack{m=1 \\ \text{odd } m}}^{M-2} \left\{ \left( \left( b_{u,I}\left[\left[\frac{M+m}{2}\right]\right] - b_{u,Q}\left[\left[\frac{M+m}{2}\right]\right] \right) \right. \right.$$
$$\left. + j\left( b_{u,I}\left[\left[\frac{M+m}{2}\right]\right] + b_{u,Q}\left[\left[\frac{M+m}{2}\right]\right] \right) \right)$$
$$\left. + \left[ \cos\left(\frac{2\pi(M-m)n}{N}\right) + \sin\left(\frac{2\pi(M-m)n}{N}\right) \right] \right\}$$

The time-domain signal $p_{u,1}[n]$ expressed as in Equation 11 may have elements in form of complex numbers for all $n$. The first radio signal according to Case #1-9 can support robust time synchronization estimation performance with respect to a high CFO, PhN, DE, and the like.

**Case #1-10**: The base sequence $b_u$ may be a complex sequence. The modified sequence $b'_u$ may correspond to a result obtained performing a polarity inversion operation and a multiplication operation of an imaginary number j on the base sequence $b_u$ (i.e., $b'_u = -jb_u$). In this case, the time domain signal $p_{u,1}[n]$ may be expressed identically or similarly to Equation 12.

[Equation 12]

$$p_{u,1}[n] = \sum_{\substack{m=0 \\ \text{even } m}}^{M-1} \left\{ \left( \left( b_{u,I}\left[\left[\frac{m}{2}\right]\right] + b_{u,Q}\left[\left[\frac{m}{2}\right]\right] \right) - j\left( b_{u,I}\left[\left[\frac{m}{2}\right]\right] - b_{u,Q}\left[\left[\frac{m}{2}\right]\right] \right) \right) \right.$$
$$\left. + \left[ \cos\left(\frac{2\pi(M-m)n}{N}\right) + \sin\left(\frac{2\pi(M-m)n}{N}\right) \right] \right\}$$
$$+ \sum_{\substack{m=1 \\ \text{odd } m}}^{M-2} \left\{ \left( \left( b_{u,I}\left[\left[\frac{M+m}{2}\right]\right] + b_{u,Q}\left[\left[\frac{M+m}{2}\right]\right] \right) \right. \right.$$
$$\left. - j\left( b_{u,I}\left[\left[\frac{M+m}{2}\right]\right] - b_{u,Q}\left[\left[\frac{M+m}{2}\right]\right] \right) \right)$$
$$\left. + \left[ \cos\left(\frac{2\pi(M-m)n}{N}\right) - \sin\left(\frac{2\pi(M-m)n}{N}\right) \right] \right\}$$

The time-domain signal $p_{u,1}[n]$ expressed as in Equation 12 may have elements in form of complex numbers for all $n$. The first radio signal according to Case #1-10 can support robust time synchronization estimation performance with respect to a high CFO, PhN, DE, and the like.

FIG. 6 shows a specific example of the first exemplary embodiment of the radio signal generation scheme, and the first exemplary embodiment of the radio signal generation scheme is not limited thereto. For example, the first exemplary embodiment of the radio signal generation scheme may be implemented in the following specific cases.

**Case #1-11**: The first reference subcarrier (e.g., DC subcarrier) may be excluded from the indexing (e.g., $k$ or $m$) associated with the subcarriers. Among elements of the first radio signal sequence corresponding to subcarriers in the frequency domain, elements of the base sequence are allocated to a group of even-numbered elements in ascending order, and elements of the modified sequence are allocated to a group of odd-numbered elements in descending order.

**Case #1-12:** The first reference subcarrier may be excluded from the indexing associated with the subcarriers. Among elements of the first radio signal sequence, elements of the base sequence are allocated to a group of even-numbered elements in descending order, and elements of the modified sequence may be allocated to a group of odd-numbered elements in ascending order.

**Case #1-13:** The first reference subcarrier may be excluded from the indexing associated with the subcarriers. Among elements of the first radio signal sequence, elements of the base sequence may be allocated to a group of odd-numbered subcarriers in ascending order, and elements of the modified sequence may be allocated to a group of even-numbered subcarriers in descending order.

**Case #1-14:** The first reference subcarrier may be excluded from the indexing associated with the subcarriers. Among elements of the first radio signal sequence, elements of the base sequence may be allocated to a group of odd-numbered subcarriers in descending order, and elements of the modified sequence may be allocated to a group of even-numbered subcarriers in ascending order.

**Case #1-15:** In Case #1-1 to Case #1-14, locations to which elements of the base sequence are allocated and locations to which elements of the modified sequence are allocated are replaced with each other.

**Case #1-16:** Case #1-1 to Case #1-15 are modified so that the first reference subcarrier is included in the indexing associated with the subcarriers.

In the first exemplary embodiment of the radio signal generation scheme, at least some of the configurations described with reference to Cases #1-1 to #1-16 may be combined with each other. In addition to the exemplary embodiments described with reference to Cases #1-1 to #1-16, the first exemplary embodiment of the radio signal generation scheme may be extended based on various radio signal (e.g., synchronization signal) design schemes or allocation schemes.

The first communication node may transmit the first radio signal generated based on the first exemplary embodiment of the radio signal generation scheme. The second communication node may receive the first radio signal transmitted from the first communication node. The second communication node may perform time synchronization, frequency synchronization, partial PCI estimation (or PID estimation), and the like, based on the first radio signal.

In an exemplary embodiment of the communication system, the first communication node may be a base station, the second communication node may be a terminal, and the first radio signal may be a synchronization signal. The second communication node may acquire time synchronization for the first communication node based on the first radio signal and access the first communication node. The second communication node may estimate time synchronization by performing correlation using the synchronization signal obtained by transforming a frequency domain signal into a time domain signal. A cross-correlation scheme may be used for such the time synchronization estimation. The cross-correlation scheme may have an advantage in terms of resource use efficiency and estimation performance compared to an auto-correlation scheme or a differential correlation scheme. The first radio signal generated according to the first exemplary embodiment of the radio signal generation scheme can support robust time synchronization performance with respect to a high CFO, PhN, DE, and the like, and can support a cross-correlation operation with low estimation complexity.

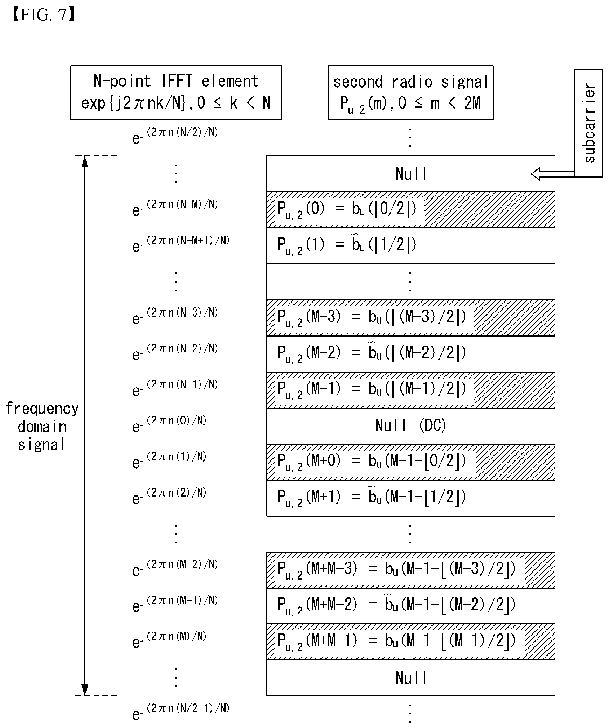

FIG. 7 is a conceptual diagram for describing a second exemplary embodiment of a radio signal generation scheme in a communication system.

Referring to FIG. 7, a communication system may include a plurality of communication nodes. The communication system may be the same as or similar to the communication system 400 described with reference to FIG. 4. Hereinafter, in describing the second exemplary embodiment of the radio signal generation scheme in the communication system with reference to FIG. 7, descriptions overlapping those described with reference to FIGS. 1 to 6 may be omitted.

**Second exemplary embodiment of radio signal generation scheme**

In an exemplary embodiment of the communication system, the first communication node may generate a radio signal according to the second exemplary embodiment of the radio signal generation scheme. The second exemplary embodiment of the radio signal generation scheme may be referred to as 'Distributed Half Forward/Reverse Concatenation (DHFRC) scheme'.

In the exemplary second embodiment of the radio signal generation scheme, a first radio signal may be generated based on the same or similar radio signal structure as the radio signal structure of the first exemplary embodiment described with reference to FIG. 5. The first radio signal may be generated based on one or more second radio signal sequences. The second radio signal sequence may be expressed as $P_{u,2}$, $P_{u,2}(k)$, $P_{u,2}[k]$, and the like. The second radio signal sequence $P_{u,2}$ may be generated based on a first sequence $b_u$ and a second sequence $b'_u$. Here, the first sequence $b_u$ may correspond to a base sequence, and the second sequence $b'_u$ may correspond to a modified sequence generated based on the base sequence. However, this is only an example for convenience of description, and the second exemplary embodiment of the radio signal generation scheme is not limited thereto. The second radio signal sequence may be defined based on the first sequence $b_u$ and the second sequence $b'_u$ identically or similarly to Equation 13.

[Equation 13]

$$P_{u,2}[m] = \begin{cases} b_u[\lfloor m/2 \rfloor], & 0 \leq \text{even } m < M \\ \tilde{b}_u[\lfloor m/2 \rfloor], & 0 \leq \text{odd } m < M \\ \tilde{b}_u[M - 1 - \lfloor (m - M)/2 \rfloor], & M \leq \text{even } m < 2M \\ b_u[M - 1 - \lfloor (m - M)/2 \rfloor], & M \leq \text{odd } m < 2M \end{cases}$$

$$b_u[k] = e^{-j\frac{\pi u k(k+1)}{M}}, \qquad k = 0, 1, \dots, M - 1$$

Referring to Equation 13, elements constituting the second radio signal sequence $P_{u,2}$ may be divided into an element group #1 and an element group #2. Here, the element group #1 may correspond to the second subcarrier group 520 described with reference to FIG. 5. The element group #2 may correspond to the third subcarrier group 530 described with reference to FIG. 5. The element group #1 may include elements corresponding to $m$ greater than or equal to 0 and smaller than M in the second radio signal sequence $P_{u2}[m]$. The element group #2 may include elements corresponding to $m$ greater than or equal to M and less than 2M in the second radio signal sequence $P_{u,2}[m]$. However, this is only an example for convenience of description, and the second exemplary embodiment of the radio signal generation scheme is not limited thereto. For example, the element group #1 may correspond to the third subcarrier group 530 described with reference to FIG. 5 and the element group #2 may correspond to the second subcarrier group 520 described with reference to FIG. 5. The element group #1 and element group #2 may be arranged at a front end and a rear end of a first reference subcarrier. Here, the first reference subcarrier may be the same as or similar to the first reference subcarrier described with reference to FIG. 5. The first reference subcarrier may correspond to a null subcarrier, a DC subcarrier, or the like. The first reference subcarrier may correspond to a center subcarrier.

The element group #1 may be divided into an element group #1-1 and an element group #1-2. The element group #1-1 may include even-numbered elements of the second radio signal sequence $P_{u,2}[m]$ in the element group #1. The element group #1-2 may include odd-numbered elements of the second radio signal sequence $P_{u,2}[m]$ in the element group #1 (m is less than M). The element group #2 may be divided into an element group #2-1 and an element group #2-2. The element group #2-1 may include even-numbered elements of the second radio signal sequence $P_{u,2}[m]$ in the element group #2. The element group #2-2 may include odd-numbered elements of the second radio signal sequence $P_{u,2}[m]$ in the element group #2.

In Equation 13, the element group #1-1 of the second radio signal sequence $P_{u,2}[m]$ may be configured as a result (i.e., $b_u[\lfloor m/2 \rfloor]$ ) of mapping elements of the first sequence $b_u$ in ascending order. The element groups #1-2 of the second radio signal sequence $P_{u,2}[m]$ may be configured as a result (i.e., $\tilde{b}_u[\lfloor m/2 \rfloor]$ ) of mapping elements of the second sequence $b'_u$ in ascending order. On the other hand, the element group #2-1 of the second radio signal sequence $P_{u,2}[m]$ may be configured as a result (i.e., $\tilde{b}_u[M - 1 - \lfloor (m - M)/2 \rfloor]$ ) of mapping elements of the second sequence $b'_u$ in descending order. The element group #2-2 of the second radio signal sequence $P_{u,2}[m]$ may be configured as a result (i.e.,

$$b_u[M - 1 - \lfloor (m - M)/2 \rfloor]$$

) of mapping elements of the first sequence $b_u$ in descending order.

According to the second exemplary embodiment of the radio signal generation scheme, in the element group #1, two elements (i.e., an element of the first sequence and a corresponding element of the second sequence) may be sequentially grouped (or associated with each other), and mapped in ascending order. On the other hand, in the element group #2, two elements (i.e., an element of the first sequence and a corresponding element of the second sequence) may be sequentially grouped, and mapped in descending order.

The first sequence may correspond to a binary sequence. The first sequence may correspond to a complex sequence. The first sequence may correspond to a Zadoff-Chu (ZC) sequence. The second sequence may be generated based on the first sequence or may be generated separately from the first sequence.

The second radio signal sequence $P_{u,2}[m]$ may be transformed into a time domain signal $P_{u,2}[n]$ based on an N-point IFFT operation or N-point inverse fast Fourier transform (IDFT) operation. When M is an odd number, the time domain signal $p_{u,2}[n]$ may be determined identically or similarly to Equation 14.

[Equation 14]

$$p_{u,2}[n] = \mathrm{IDFT}\{P_{u,2}[m]\}$$
$$= \sum_{m=-\frac{N}{2}}^{-1} P_{u,2}[m+M]e^{j\frac{2\pi mn}{N}} + \sum_{m=1}^{\frac{N}{2}-1} P_{u,2}[m+M-1]e^{j\frac{2\pi mn}{N}}, \qquad 0 \le n$$
$$< N$$

Identically or similarly to those described with reference to FIG. 5, when $m<0$ or m>2M-1, $P_{u,2}[n]$ may be 0. Equation 14 may be expressed as Equation 15.

$$p_{u,2}[n] = \sum_{m=-M}^{-1} P_{u,2}[m+M]e^{j\frac{2\pi mn}{N}} + \sum_{m=0}^{M} P_{u,2}[m+M-1]e^{j\frac{2\pi mn}{N}}, \qquad 0 \le n$$
$$< N$$

Equation 15 may correspond to the first radio signal (or time domain signal $P_{u,2}[n]$ of the first radio signal) generated based on the configurations described with reference to FIGS. 5 and 7.

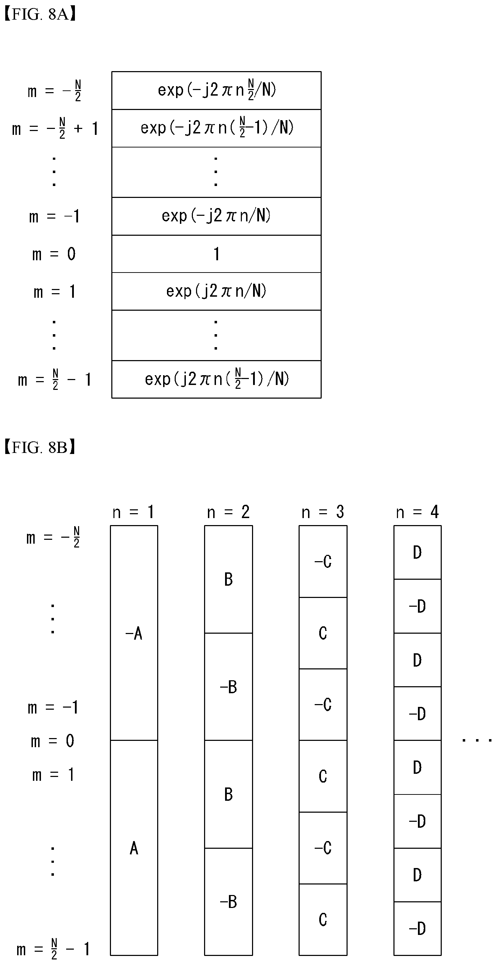

FIGS. 8A and 8B are conceptual diagrams for describing a second exemplary embodiment of a radio signal generation scheme in a communication system.

Referring to FIGS. 8A and 8B, a communication system may include a plurality of communication nodes. The communication system may be the same as or similar to the communication system 400 described with reference to FIG. 4. The communication system may be the same as or similar to the communication system described with reference to FIG. 7. Hereinafter, in describing the second exemplary embodiment of the radio signal structure in the communication system with reference to FIGS. 8A and 8B, descriptions overlapping those described with reference to FIGS. 1 to 7 may be omitted.

FIG. 8A shows an exemplary embodiment of an IDFT vector structure according to the IDFT operation scheme. Referring to FIG. 8A, the IDFT vector structure may have periodic characteristics (or periodicity). For example, the IDFT vector structure may be composed of values of $exp\{j2\pi nm/N\}$ (i.e., e^{j2πnm/N}) that change according to the value of $m$. Here, as the value of $m$ changes, the value of $exp\{j2\pi nm/N\}$ may change with periodicity. Such the periodicity may be determined or changed according to the value of n.

FIG. 8B shows an example of periodic characteristics of the IDFT vector structure shown in FIG. 8A. Referring to FIG. 8B, when $n=1$, an upper half of the IDFT vector structure (e.g., a region where $m$ is less than 0 in FIG. 8A) and a lower half of the IDFT vector structure (e.g., a region where $m$ is greater than 0 in FIG. 8A) may be regarded as forming a kind of symmetrical structure around the element of m=0. Here, the upper half of the IDFT vector structure may be regarded as being composed of values whose polarities are inverted (or phases are reversed by 180 degrees) from values constituting the lower half of the IDFT vector structure. On the other hand, when n = 2, the IDFT vector may have a structure in which the same shape (or structure) is repeated twice. For example, the upper half of the IDFT vector structure and the lower half of the IDFT vector structure may be configured identically to each other. Each of the upper half of the IDFT vector structure and the lower half of the IDFT vector structure may have an internal structure in which blocks having the same pattern and reversed phases are connected in series. In this way, the IDFT vector may have periodic characteristics in which the same shape (or structure) is repeated as many times as $n$ as the value of $n$ increases.

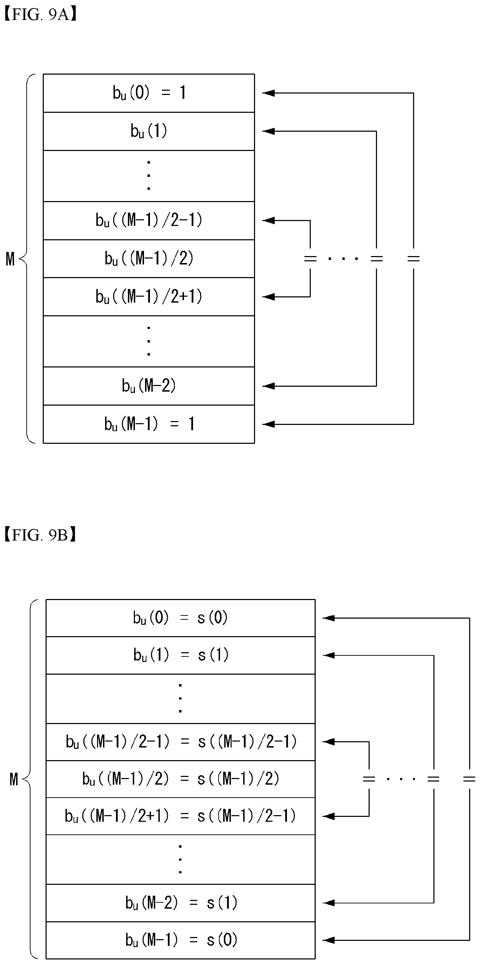

FIGS. 9A to 9C are conceptual diagrams for describing exemplary embodiments of the first and second sequences in a communication system.

Referring to FIGS. 9A to 9C, a communication system may include a plurality of communication nodes. The communication system may be the same as or similar to the communication system 400 described with reference to FIG. 4. The communication system may be the same as or similar to the communication system described with reference to FIGS. 8A and 8B. Hereinafter, in describing the exemplary embodiments of the first and second sequences in the communication system with reference to FIGS. 9A to 9C, descriptions overlapping with those described with reference to FIGS. 1 to 8B may be omitted.

In the second exemplary embodiment of the radio signal generation scheme, a first radio signal may be generated based on the same or similar radio signal structure as the radio signal structure of the first exemplary embodiment described with reference to FIG. 5. The first radio signal may be generated based on one or more second radio signal sequences. The second radio signal sequence $P_{u,2}$ may be generated based on the first sequence $b_u$ and the second sequence $b'_u$. Here, the first sequence $b_u$ may correspond to a base sequence, and the second sequence $b'_u$ may correspond to a modified sequence generated based on the base sequence. In an exemplary embodiment of the communication system, the first sequence may correspond to a ZC sequence.

FIG. 9A shows an first exemplary embodiment of a ZC sequence structure. Identically or similarly to Equation 13, the first sequence $b_u$ corresponding to the base sequence composed of the ZC sequence may be expressed identically or similarly to Equation 16.

[Equation 16]

$$b_u[k] = e^{-j\frac{\pi uk(k+1)}{M}}$$

Here, referring to Equation 16 and FIG. 9A, a ZC sequence having an odd length M may have a symmetrical structure around an element having m=0 (e.g., element corresponding to the center subcarrier). In addition, the ZC sequence may have the same or similar periodicity as Equation 17.

[Equation 17]

$$b_u(M - 1 - m) = b_u(m)$$

Exemplary embodiments of the first radio signal (or time domain signal $P_{u,2}$ [n] of the first radio signal) may be classified into various cases according to a generation scheme of the first sequence $b_u$ and the second sequence $b'_u$. When the first sequence $b_u$ corresponds to a complex ZC sequence, cases of the first radio signal classified according to the generation scheme of the second sequence $b'_u$ may be the same as or similar to those shown in Table 5.

[Table 5]

| Number | First sequence $b_u[\cdot]$ | Second sequence $\tilde{b}_u[\cdot]$ |
|---|---|---|
| #2-1 | Complex ZC sequence | $\tilde{b}_u[\cdot] = -b_{u,I}[\cdot] - jb_{u,Q}[\cdot] = -b_u[\cdot]$ |
| #2-2 | Complex ZC sequence | $\tilde{b}_u[\cdot] = b_{u,I}[\cdot] + jb_{u,Q}[\cdot] = \tilde{b}_u[\cdot]$ |
| #2-3 | Complex ZC sequence | $\tilde{b}_u[\cdot] = b_{u,I}[\cdot] - jb_{u,Q}[\cdot] = b_u^*[\cdot]$ |
| #2-4 | Complex ZC sequence | $\tilde{b}_u[\cdot] = -b_{u,I}[\cdot] + jb_{u,Q}[\cdot] = -b_u^*[\cdot]$ |
| #2-5 | Complex ZC sequence | $\tilde{b}_u[\cdot] = -b_{u,Q}[\cdot] - jb_{u,I}[\cdot] = -jb_u^*[\cdot]$ |
| #2-6 | Complex ZC sequence | $\tilde{b}u[\cdot] = b_{u,Q}[\cdot] + jb_{u,I}[\cdot] = jb_u^*[\cdot]$ |
| #2-7 | Complex ZC sequence | $\tilde{b}_u[.] = b_{u,Q}[\cdot] + jb_{u,I}[\cdot] = jb_u[\cdot]$ |
| #2-8 | Complex ZC sequence | $\tilde{b}_u[\cdot] = b_{u,Q}[\cdot] - jb_{u,I}[\cdot] = -jb_u[\cdot]$ |

When IDFT is applied to a frequency domain signal, a time domain signal may be obtained from the frequency domain signal. Such the operation may be the same as or similar to obtaining an inner product of a signal vector in the frequency domain and an IDFT vector for cases of n=0, 1, ..., and N-1. Similarly to what has been described with reference to FIG. 9A, the signal vector in the frequency domain may have a symmetrical characteristic. Among elements of the second radio signal sequence $p_{u,2}$, elements (i.e., $p_{u,2}[0]$, $P_{u,2}[2]$, ... , $P_{u,2}[M-1]$) corresponding to upper subcarriers in the frequency domain and the elements (i.e., $P_{u,2}[2M-1]$, $P_{u,2}[2M-2]$, ... , $P_{u,2}[M]$) corresponding to lower subcarriers in the frequency domain may have the same or similar values. Accordingly, the time domain signal $P_{u,2}[n]$ according to Case #2-1 to Case #2-8 may have a value of 0 periodically. The time domain signal $p_{u,2}[n]$ of the first radio signal may have a value of 0 once every four elements. For example, the time domain signal $p_{u,2}[n]$ according to Case #2-1 to Case #2-8 may have a value of 0 when n=2, 6, 10, ...., or the like. Depending on the number of elements having a value of 0 in the time domain signal $p_{u,2}[n]$, estimation complexity according to the first radio signal may be reduced. The first radio signal according to Case #2-1 to Case #2-8 can support robust time synchronization estimation performance with respect to a high CFO, PhN, DE, and the like.

Meanwhile, exemplary embodiments of the first radio signal may be classified into various cases according to the generation scheme of the second radio signal sequence $p_{u,2}$.

**Case #2-9:** In the definition of the second radio signal sequence $p_{u,2}$ described with reference to FIG. 7 and Equation 13, a polarity of a region corresponding to the element group #2 may be inverted. For example, in Case #2-9, the second radio signal sequence $p_{u,2}$ may be defined as in Equation 18.

[Equation 18]

$$P_{u,2}[m] = \begin{cases} b_u[\lfloor m/2 \rfloor], & 0 \le \text{even } m < M \\ \tilde{b}_u[\lfloor m/2 \rfloor], & 0 \le \text{odd } m < M \\ -\tilde{b}_u[M - 1 - \lfloor (m - M)/2 \rfloor], & M \le \text{even } m < 2M \\ -b_u[M - 1 - \lfloor (m - M)/2 \rfloor], & M \le \text{odd } m < 2M \end{cases}$$

$$b_u[k] = e^{-j\frac{\pi u k (k+1)}{M}}, \qquad k = 0, 1, ..., M - 1$$

The time domain signal $p_{u,2}[n]$ according to Case #2-9 may have a value of 0 periodically (e.g., when n is a multiple of 4). Accordingly, estimation complexity can be reduced. The first radio signal according to Case #2-9 can support robust time synchronization estimation performance with respect to a high CFO, PhN, DE, and the like.

**Case #2-10:** The first sequence (e.g., base sequence) may not be a complex ZC sequence, and may be generated based on a separate sequence (hereinafter referred to as 'third sequence $s$'). Here, the third sequence $s$ may have a length of (1+(M-1)/2), and may have various forms such as a binary sequence and a complex sequence. FIG. 9B shows an exemplary embodiment of the definition of the first sequence $b_u$ based on the third sequence $s$. Referring to FIG. 9B, the first sequence $b_u(t)$ having a length of M may be defined based on the third sequence $s(t)$ having a length of (1+(M-1)/2). For example, in Case #2-10 when M is an odd number, the first sequence $b_u(t)$ may be defined as in Equation 19.

[Equation 19]

$$b_u(t) = \begin{cases} s(t), & 0 \le t \le (M - 1)/2 \\ s(M - 1 - t), & (M - 1)/2 < t < M \end{cases}$$

Referring to FIG. 9B and Equation 19, similarly to the ZC sequence described with reference to FIG. 9A, the first sequence $b_u$ in Case #2-10 may have a symmetrical structure centering on an element corresponding to the index (M-1)/2 (e.g., element corresponding to the center subcarrier). Elements symmetrical to each other in the first sequence $b_u$ may have the same value. The time domain signal $p_{u,2}[n]$ according to Case #2-10 may have a value of 0 periodically (e.g., when n=2, 6, 10, ..., or the like). Accordingly, estimation complexity can be reduced. The first radio signal according to Case #2-10 can support robust time synchronization estimation performance with respect to a high CFO, PhN, DE, and the like.

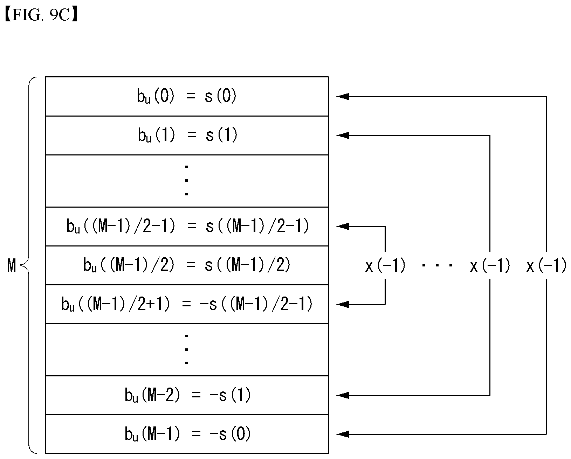

**Case #2-11:** The first sequence (e.g., base sequence) may not be a complex ZC sequence, and may be generated based on a separate sequence (hereinafter referred to as 'third sequence s'). Here, the third sequence s may have a length of (1+(M-1)/2), and may have various forms such as a binary sequence and a complex sequence. FIG. 9C shows an exemplary embodiment of the definition of the first sequence $b_u$ based on the third sequence s. Referring to FIG. 9B, the first sequence $b_u(t)$ having a length of M may be defined based on the third sequence $s(t)$ having a length of (1+(M-1)/2). For example, in Case #2-11 when M is an odd number, the first sequence $b_u(t)$ may be defined as in Equation 20.

[Equation 20]

$$b_u(t) = \begin{cases} s(t), & 0 \le t \le (M-1)/2 \\ -s(M-1-t), & (M-1)/2 < t < M \end{cases}$$

Referring to FIG. 9C and Equation 20, similarly to the ZC sequence described with reference to FIG. 9A, the first sequence $b_u$ in Case #2-11 may have a symmetrical structure centering on an element corresponding to the index (M-1)/2 (e.g., element corresponding to the center subcarrier). Elements symmetrical to each other in the first sequence $b_u$ may have polarity-inverted (or phase-reversed) values. The time domain signal $p_{u,2}[n]$ according to Case #2-11 may have a value of 0 periodically (e.g., when $n$ is a multiple of 4). Accordingly, estimation complexity can be reduced. The first radio signal according to Case #2-11 can support robust time synchronization estimation performance with respect to a high CFO, PhN, DE, and the like.

FIG. 7 shows a specific example of the second embodiment of the radio signal generation scheme, and the second exemplary embodiment of the radio signal generation scheme is not limited thereto. For example, the second exemplary embodiment of the radio signal generation scheme may be implemented in the following specific cases.

**Case #2-12:** The first reference subcarrier (e.g., DC subcarrier) may be excluded from the indexing (e.g., $k$ or $m$) associated with the subcarriers. An upper subcarrier group and a lower subcarrier group may be classified based on the first reference subcarrier in the frequency domain. The element group #1 of the second radio signal sequence may correspond to the upper subcarrier group in the frequency domain, and the element group #2 of the second radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), and elements of the first and second sequences may be allocated in descending order.

**Case #2-13:** The first reference subcarrier may be excluded from the indexing associated with the subcarriers. The element group #1 of the second radio signal sequence may correspond to the upper subcarrier group in the frequency domain, and the element group #2 of the second radio signal sequence may correspond to the lower subcarrier group in the frequency domain. In the element group #1, two elements may be sequentially grouped (or associated with other), and elements of the first and second sequences may be allocated in descending order. In the element group #2, two elements may be sequentially grouped (or associated with each other), and elements of the first and second sequences may be allocated in ascending order.

**Case #2-14:** The first reference subcarrier may be excluded from the indexing associated with the subcarriers. The element group #2 of the second radio signal sequence may correspond to the upper subcarrier group in the frequency domain, and the element group #1 of the second radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), and elements of the first and second sequences may be allocated in descending order.

**Case #2-15:** The first reference subcarrier may be excluded from the indexing associated with the subcarriers. The element group #2 of the second radio signal sequence may corresponds to the upper subcarrier group in the frequency domain, and the element group #1 of the second radio signal sequence may correspond to the lower subcarrier group in the frequency domain. In the element group #1, two elements may be sequentially grouped (or associated with each other), and elements of the first and second sequences may be allocated in descending order. In the element group #2, two elements may be sequentially grouped (or associated with each other), and elements of the first and second sequences may be allocated in ascending order.

**Case #2-16:** In Case #2-1 to Case #2-15, locations where the elements of the first sequence are allocated and locations where the elements of the second sequence are allocated may be replaced with each other.

**Case #2-17:** Case #2-1 to Case #2-16 may be modified so that the first reference subcarrier is included in the indexing associated with the subcarriers.

In the second exemplary embodiment of the radio signal generation scheme, at least some of the configurations described with reference to Cases #2-1 to #2-16 may be combined with each other. In addition to the exemplary embodiments described with reference to Cases #2-1 to #2-16, the second exemplary embodiment of the radio signal generation scheme may be extended based on various radio signal (e.g., synchronization signal) design schemes or allocation schemes.

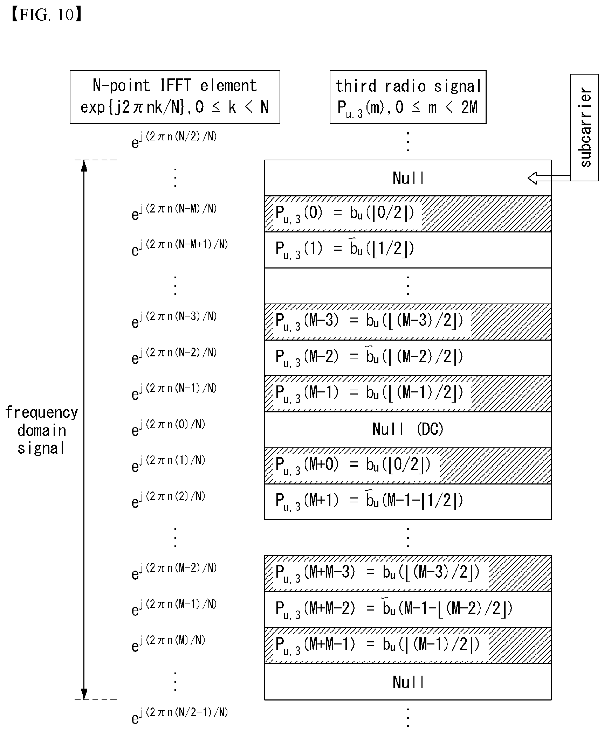

FIG. 10 is a conceptual diagram for describing a third exemplary embodiment of a radio signal generation scheme in a communication system.

Referring to FIG. 10, a communication system may include a plurality of communication nodes. The communication system may be the same as or similar to the communication system 400 described with reference to FIG. 4. Hereinafter, in describing the third exemplary embodiment of the radio signal generation scheme in the communication system with reference to FIG. 10, descriptions overlapping with those described with reference to FIGS. 1 to 9C may be omitted.

**Third exemplary embodiment of radio signal generation scheme**

In an exemplary embodiment of the communication system, the first communication node may generate a radio signal according to the third exemplary embodiment of the radio signal generation scheme. The second exemplary embodiment of the radio signal generation scheme may be referred to as 'Distributed Full/Half Forward/Reverse Concatenation (DFHFRC) scheme'.

In the third exemplary embodiment of the radio signal generation scheme, a first radio signal may be generated based on the same or similar radio signal structure as the radio signal structure of the first exemplary embodiment described with reference to FIG. 5. The first radio signal may be generated based on one or more third radio signal sequences. The third radio signal sequence may be expressed as $P_{u,3}$, $P_{u,3}(k)$, $P_{u,3}[k]$, and the like. The third radio signal sequence $P_{u,3}$ may be generated based on a first sequence $b_u$ and a second sequence $b'_u$. Here, the first sequence $b_u$ may correspond to a base sequence, and the second sequence b'u may correspond to a modified sequence generated based on the base sequence. However, this is only an example for convenience of description, and the third exemplary embodiment of the radio signal generation scheme is not limited thereto. The third radio signal sequence may be defined based on the first sequence $b_u$ and the second sequence $b'_u$ identically or similarly to Equation 21.

[Equation 21]

$$P_{u,3}[m] = \begin{cases} b_u[\lfloor m/2 \rfloor], & 0 \leq \text{even } m < M \\ \tilde{b}_u[\lfloor m/2 \rfloor], & 0 \leq \text{odd } m < M \\ \tilde{b}_u[M - 1 - \lfloor (m - M)/2 \rfloor], & M \leq \text{even } m < 2M \\ b_u[\lfloor (m - M)/2 \rfloor], & M \leq \text{odd } m < 2M \end{cases}$$

$$b_u[k] = e^{-j\frac{\pi u k(k+1)}{M}}, \qquad k = 0, 1, \dots, M - 1$$

Referring to Equation 21, elements constituting the third radio signal sequence $P_{u,3}$ may be divided into an element group #1 and an element group #2. The element group #1 may be divided into an element group #1-1 and an element group #1-2. The element group #2 may be divided into an element group #2-1 and an element group #2-2. Here, the element groups (i.e., element group #1, element group #2, element group #1-1, element group #1-2, element group #2-1, element group #2-2, etc.) may be divided identically or similarly to the element groups described with reference to 9C.

In Equation 21, the element group #1-1 of the third radio signal sequence $P_{u,3}[m]$ may be configured as a result (i.e., $b_u[\lfloor m/2 \rfloor]$ ) obtained by mapping elements of the first sequence $b_u$ in ascending order. The element groups #1-2 of the third radio signal sequence $P_{u,3}[m]$ may be configured as a result (i.e., $\tilde{b}_u[\lfloor m/2 \rfloor]$ ) obtained by mapping elements of the second sequence $b'_u$ in ascending order. On the other hand, the element group #2-1 of the third radio signal sequence $P_{u,3}[m]$ may be configured as a result (i.e., $\tilde{b}_u[M - 1 - \lfloor (m - M)/2 \rfloor]$ ) obtained by mapping elements of the second sequence $b'_u$ in descending order. The element group #2-2 of the third radio signal sequence $P_{u,3}[m]$ may be configured as a result (i.e., $b_u[\lfloor (m - M)/2 \rfloor]$ ) obtained by mapping elements of the first sequence $b_u$ in ascending order.

According to the third exemplary embodiment of the radio signal generation scheme, in the element group #1, two elements (i.e., an element of the first sequence and a corresponding element of the second sequence) may be sequentially grouped and mapped in ascending order. Meanwhile, in the element group #2, two elements (i.e., an element of the first sequence and a corresponding element of the second sequence) may sequentially grouped, one may be mapped in ascending order, and the other may be mapped in descending order.

Similarly to Case #2-1 to Case #2-11 described with reference to the second exemplary embodiment of the radio signal generation scheme, a time domain signal $P_{u,3}[n]$ according to the third exemplary embodiment of the radio signal generation scheme may have a value of 0 once every 4 elements. The estimation complexity according to the first radio signal may be reduced according to the number of elements having a value of 0 in the time domain signal $P_{u,3}[n]$. The first radio signal according to the third exemplary embodiment of the radio signal generation scheme can support robust time synchronization estimation performance with respect to a high CFO, PhN, DE, and the like.

FIG. 10 shows a specific example of the third exemplary embodiment of the radio signal generation scheme, and the third exemplary embodiment of the radio signal generation scheme is not limited thereto. For example, the third exemplary embodiment of the radio signal generation scheme may be implemented in the following specific cases.

**Case #3-1:** The first reference subcarrier (e.g., DC subcarrier) may excluded from the indexing (e.g., $k$ or $m$) associated with the subcarriers. An upper subcarrier group and a lower subcarrier group may be divided based on the first reference subcarrier in the frequency domain. The element group #1 of the third radio signal sequence may correspond to the upper subcarrier group in the frequency domain, and the element group #2 of the third radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), elements of the first sequence may be allocated in ascending order, and elements of the second sequence may be allocated in descending order.

**Case #3-2:** The first reference subcarrier may be excluded from the indexing associated with the subcarriers. The element group #1 of the third radio signal sequence may correspond to the upper subcarrier group in the frequency domain, and the element group #2 of the third radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), elements of the first sequence may be allocated in descending order, and elements of the second sequence may be allocated in ascending order.

**Case #3-3:** The first reference subcarrier may be excluded from the indexing associated with the subcarriers. The element group #1 of the third radio signal sequence may correspond to the upper subcarrier group in the frequency domain, and the element group #2 of the third radio signal sequence may correspond to the lower subcarrier group in the frequency domain. In the element group #1, two elements may be sequentially grouped (or associated with each other), and elements of the first and second sequences may be allocated in descending order. In the element group #2, two elements may be sequentially grouped (or associated with each other), elements of the first sequence may be allocated in ascending order, and elements of the second sequence may be allocated in descending order.

**Case #3-4:** The first reference subcarrier may excluded from the indexing associated with the subcarriers. The element group #1 of the third radio signal sequence may correspond to the upper subcarrier group in the frequency domain, and the element group #2 of the third radio signal sequence may correspond to the lower subcarrier group in the frequency domain. In the element group #1, two elements may be sequentially grouped (or associated with each other), and elements of the first and second sequences are allocated in descending order. In the element group #2, two elements may be sequentially grouped (or associated with each other), elements of the first sequence may be allocated in descending order, and elements of the second sequence may be allocated in ascending order.

**Case #3-5:** The first reference subcarrier may be excluded from the indexing associated with the subcarriers. The element group #2 of the third radio signal sequence may correspond to the upper subcarrier group in the frequency domain, and the element group #1 of the third radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), elements of the first sequence may be allocated in ascending order, and elements of the second sequence may be allocated in descending order.

**Case #3-6:** The first reference subcarrier may be excluded from the indexing associated with the subcarriers. The element group #2 of the third radio signal sequence may correspond to the upper subcarrier group in the frequency domain, and the element group #1 of the third radio signal sequence may correspond to the lower subcarrier group in the frequency domain. In the element group #1, two elements may be sequentially grouped (or associated with each other), and elements of the first and second sequences may be allocated in ascending order. In the element group #2, two elements may be sequentially grouped (or associated with each other), elements of the first sequence may be allocated in descending order, and elements of the second sequence may be allocated in ascending order.

**Case #3-7:** The first reference subcarrier may be excluded from the indexing associated with the subcarriers. The element group #2 of the third radio signal sequence may correspond to the upper subcarrier group in the frequency domain, and the element group #1 of the third radio signal sequence may correspond to the lower subcarrier group in the frequency domain. In the element group #1, two elements may be sequentially grouped (or associated with each other), and elements of the first and second sequences may be allocated in descending order. In the element group #2, two elements may be sequentially grouped (or associated with each other), elements of the first sequence may be allocated in ascending order, and elements of the second sequence may be allocated assigned in descending order.

**Case #3-8:** The first reference subcarrier may be excluded from the indexing associated with the subcarriers. The element group #2 of the third radio signal sequence may correspond to the upper subcarrier group in the frequency domain, and the element group #1 of the third radio signal sequence may correspond to the lower subcarrier group in the frequency domain. In the element group #1, two elements may be sequentially grouped (or associated with each other), and elements of the first and second sequences may be allocated in descending order. In the element group #2, two elements may be sequentially grouped (or associated with each other), elements of the first sequence may be allocated in descending order, and elements of the second sequence may be allocated in ascending order.

**Case #3-9:** In Case #3-1 to Case #3-8, locations where the elements of the first sequence are allocated and locations where the elements of the second sequence are allocated may be replaced with each other.

**Case #3-10:** Case #3-1 to Case #3-9 may be modified so that the first reference subcarrier is included in the indexing associated with the subcarriers.

In the third exemplary embodiment of the radio signal generation scheme, at least some of the configurations described with reference to cases #3-1 to #3-10 may be combined with each other. In addition to the exemplary embodiments described with reference to cases #3-1 to case #3-10, the third exemplary embodiment of the radio signal generation scheme may be extended based on various radio signal (e.g., synchronization signal) design schemes or allocation schemes.

According to an exemplary embodiment of a method and an apparatus for radio signal transmission and reception in a communication system, performance of a synchronization estimation operation based on a radio signal transmitted and received between a transmitting node and a receiving node can be improved. A first radio signal according to an exemplary embodiment of the method and apparatus for radio signal transmission and reception in the communication system may be generated based on the Distributed Forward/Reverse Concatenation scheme, Distributed Half Forward/Reverse Concatenation scheme, Distributed Full/Half Forward/Reverse Concatenation scheme, or the like. According to the first radio signal generated as describe above, complexity of the synchronization estimation operation can be reduced. The first radio signal according to an exemplary embodiment of the method and apparatus for radio signal transmission and reception in the communication system can support robust time synchronization estimation performance with respect to a high CFO, PhN, DE, and the like.

However, the effects that can be achieved by the radio signal transmission and reception method and apparatus in the communication system according to the exemplary embodiments of the present disclosure are not limited to those mentioned above, and other effects not mentioned may be clearly understood by those of ordinary skill in the art to which the present disclosure belongs from the configurations described in the present disclosure.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. An operation method of a first communication node in a communication system, the operation method comprising:

   generating a first sequence;
   generating a second sequence;
   generating a first signal sequence based on the first sequence and the second sequence; and
   transmitting a first signal generated by modulating the first signal sequence,
   wherein even-numbered elements and odd-numbered elements of the first signal sequence are classified as a first element group and a second element group, respectively, one of the first sequence and the second sequence is mapped in ascending order in the first element group, and the other of the first sequence and the second sequence is mapped in descending order in the second element group.

2. The operation method according to claim 1, wherein the generating of the second sequence comprises: generating the second sequence by modifying the first sequence.

3. The operation method according to claim 1, wherein the first sequence is a binary sequence, and the second sequence is a sequence obtained by performing a replication operation on the first sequence or by performing a polarity inversion operation on the first sequence.

4. The operation method according to claim 1, wherein the first sequence is a complex sequence, and the second sequence is a sequence obtained by applying at least part of a replication operation, a polarity inversion operation, a conjugate operation, or a complex multiplication operation to the first sequence.

5. The operation method according to claim 1, wherein the first signal is generated to have a real value or a pure imaginary value in time domain.

6. The operation method according to claim 1, wherein the generating of the first signal sequence comprises:

   mapping elements of the first sequence to the even-numbered elements included in the first element group among the elements of the first signal sequence in ascending order; and
   mapping elements of the second sequence to the odd-numbered elements included in the second element group among the elements of the first signal sequence in descending order.

7. The operation method according to claim 1, wherein the generating of the first signal sequence comprises:

   mapping elements of the first sequence to the odd-numbered elements included in the second element group among the elements of the first signal sequence in descending order; and
   mapping elements of the second sequence to the even-numbered elements included in the first element group among the elements of the first signal sequence in ascending order.

8. An operation method of a first communication node in a communication system, the operation method comprising:

   generating a first sequence;
   generating a second sequence;
   generating a first signal sequence based on the first sequence and the second sequence; and
   transmitting a first signal generated by modulating the first signal sequence,
   wherein even-numbered elements and odd-numbered elements among elements corresponding to a first range in the first signal sequence are classified as a first element group and a second element group, respectively, even-numbered elements and odd-numbered elements among elements corresponding to a second range in the first signal sequence are classified as a third element group and a fourth element group, respectively, the first sequence is mapped in ascending and descending order in the first and fourth element groups, and the second sequence is mapped in ascending and descending order in the third and fourth element groups.

9. The operation method according to claim 8, wherein the first sequence is a complex sequence, and the second sequence is a sequence obtained by applying at least part of a replication operation, a polarity inversion operation, a conjugate operation, or a complex multiplication operation to the first sequence.

10. The operation method according to claim 8, wherein the first sequence is a complex Zadoff-Chu (ZC) sequence, the first signal is generated to periodically have a value of 0 for every P elements in time domain, and P is a natural number greater than 1.

11. The operation method according to claim 8, wherein the generating of the first sequence comprises:

> generating a third sequence;
> mapping elements of the third sequence to elements corresponding to a third range among elements constituting the first sequence in ascending order; and
> mapping elements of the third sequence to elements corresponding to a fourth range among elements constituting the first sequence in descending order,
> wherein the first signal is generated to periodically have a value of 0 for every P elements in time domain, and P is a natural number greater than 1.

12. The operation method according to claim 8, wherein the generating of the first sequence comprises:

> mapping elements of the first sequence to elements of the first element group in ascending order;
> mapping elements of the second sequence to elements of the second element group in ascending order;
> mapping elements of the second sequence to elements of the third element group in descending order; and
> mapping elements of the first sequence to elements of the fourth element group in descending order.

13. The operation method according to claim 8, wherein the generating of the first sequence comprises:

> mapping elements of the first sequence to elements of the first element group in descending order;
> mapping elements of the second sequence to elements of the second element group in descending order;
> mapping elements of the second sequence to elements of the third element group in ascending order; and
> mapping elements of the first sequence to elements of the fourth element group in ascending order.

14. A first communication node in a communication system, comprising a processor, wherein the processor causes the first communication to perform:

> generating a first sequence;
> generating a second sequence;
> generating a first signal sequence based on the first sequence and the second sequence; and
> transmitting a first signal generated by modulating the first signal sequence,
> wherein even-numbered elements and odd-numbered elements among elements corresponding to a first range in the first signal sequence are classified as a first element group and a second element group, respectively, even-numbered elements and odd-numbered elements among elements corresponding to a second range in the first signal sequence are classified as a third element group and a fourth element group, respectively, the first sequence is mapped in ascending and descending order in the first and fourth element groups, and the second sequence is mapped in ascending and descending order in the third and fourth element groups.

15. The first communication node according to claim 14, wherein the first sequence is a complex Zadoff-Chu (ZC) sequence, the first signal is generated to periodically have a value of 0 for every P elements in time domain, and P is a natural number greater than 1.

16. The first communication node according to claim 14, wherein in the generating of the first sequence, the processor further causes the first communication to perform:

> generating a third sequence;
> mapping elements of the third sequence to elements corresponding to a third range among elements constituting the first sequence in ascending order; and
> mapping elements of the third sequence to elements corresponding to a fourth range among elements constituting the first sequence in descending order,
> wherein the first signal is generated to periodically have a value of 0 for every P elements in time domain, and P is a natural number greater than 1.

17. The first communication node according to claim 14, wherein in the generating of the first sequence, the processor further causes the first communication to perform:

mapping elements of the first sequence to elements of the first element group in ascending order;
mapping elements of the second sequence to elements of the second element group in ascending order;
mapping elements of the second sequence to elements of the third element group in descending order; and
mapping elements of the first sequence to elements of the fourth element group in ascending order.

18. The first communication node according to claim 14, wherein in the generating of the first sequence, the processor further causes the first communication to perform:

mapping elements of the first sequence to elements of the first element group in ascending order;
mapping elements of the second sequence to elements of the second element group in descending order;
mapping elements of the second sequence to elements of the third element group in ascending order; and
mapping elements of the first sequence to elements of the fourth element group in ascending order.

【FIG. 1】

【FIG. 2】

200

220

memory

ROM    RAM

210

processor

input
interface
device    240

output
interface
device    250

270

storage
device    260

transceiver    230

【FIG. 3】

300

frame    330

slot    310

#0 $\cdots$ #($N_{slot}^{subframe, \mu}-1$) $\cdots$ #($N_{slot}^{frame, \mu}-1$)

320

subframe

【FIG. 4】

400

```
┌──────────────────────────┐              ┌──────────────────────────┐
│ first communication node │─401          │ second communication node│─402
└──────────────────────────┘              └──────────────────────────┘
             │                                         │
  ┌────────────────────────┐                           │
  │ generate base sequence │─S410                       │
  └────────────────────────┘                           │
             │                                         │
  ┌────────────────────────┐                           │
  │     generate first     │─S420                       │
  │     signal sequence    │                           │
  └────────────────────────┘                           │
             │                                         │
  ┌────────────────────────┐                           │
  │ radio resource mapping │─S430                       │
  └────────────────────────┘                           │
             │         first signal                    │
             │─────────────────────────────────────────▶─S440
             │                                         │
             │              ┌──────────────────────────────┐
             │              │ synchronization estimation    │─S450
             │              │ based on first signal         │
             │              └──────────────────────────────┘
             │                                         │
```

【FIG. 5】

500

N subcarriers | N/2 subcarriers

| 0 |
| 0 |
| ⋮ |
| 0 |

Null
$P_u[0]$
$P_u[1]$
⋮
$P_u[M-3]$
$P_u[M-2]$
$P_u[M-1]$

} 520

Null
$P_u[M]$
$P_u[M+1]$
⋮
$P_u[2M-3]$
$P_u[2M-2]$
$P_u[2M-1]$

} 530

| 0 |
| 0 |
| ⋮ |
| 0 |

【FIG. 6】

| N-point IFFT element<br>$\exp\{j2\pi nk/N\}, 0 \le k < N$ | first radio signal<br>$P_{u,1}(m), 0 \le m < 2M$ | subcarrier |
|---|---|---|

$e^{j(2\pi n(N/2)/N)}$     ⋮     Null

$e^{j(2\pi n(N-M)/N)}$     $P_{u,1}(0) = b_u(\lfloor 0/2 \rfloor)$

$e^{j(2\pi n(N-M+1)/N)}$     $P_{u,1}(1) = \overline{b}_u(M-1-\lfloor 1/2 \rfloor)$

⋮     ⋮

$e^{j(2\pi n(N-3)/N)}$     $P_{u,1}(M-3) = b_u(\lfloor (M-3)/2 \rfloor)$

$e^{j(2\pi n(N-2)/N)}$     $P_{u,1}(M-2) = \overline{b}_u(M-1-\lfloor (M-2)/2 \rfloor)$

$e^{j(2\pi n(N-1)/N)}$     $P_{u,1}(M-1) = b_u(\lfloor (M-1)/2 \rfloor)$

$e^{j(2\pi n(0)/N)}$     Null (DC)

$e^{j(2\pi n(1)/N)}$     $P_{u,1}(M+0) = \overline{b}_u(M-1-\lfloor M/2 \rfloor)$

$e^{j(2\pi n(2)/N)}$     $P_{u,1}(M+1) = b_u(\lfloor (M+1)/2 \rfloor)$

frequency domain signal

⋮     ⋮

$e^{j(2\pi n(M-2)/N)}$     $P_{u,1}(M+M-3) = \overline{b}_u(M-1-\lfloor (2M-3)/2 \rfloor)$

$e^{j(2\pi n(M-1)/N)}$     $P_{u,1}(M+M-2) = b_u(\lfloor (2M-2)/2 \rfloor)$

$e^{j(2\pi n(M)/N)}$     $P_{u,1}(M+M-1) = \overline{b}_u(M-1-\lfloor (2M-1)/2 \rfloor)$

Null

⋮

$e^{j(2\pi n(N/2-1)/N)}$     ⋮

【FIG. 7】

| N-point IFFT element<br>$\exp\{j2\pi nk/N\}, 0 \leq k < N$ | second radio signal<br>$P_{u,2}(m), 0 \leq m < 2M$ | subcarrier |
|---|---|---|

$e^{j(2\pi n(N/2)/N)}$

$\vdots$

Null

$e^{j(2\pi n(N-M)/N)}$    $P_{u,2}(0) = b_u(\lfloor 0/2 \rfloor)$

$e^{j(2\pi n(N-M+1)/N)}$    $P_{u,2}(1) = \tilde{b}_u(\lfloor 1/2 \rfloor)$

$\vdots$

$e^{j(2\pi n(N-3)/N)}$    $P_{u,2}(M-3) = b_u(\lfloor (M-3)/2 \rfloor)$

$e^{j(2\pi n(N-2)/N)}$    $P_{u,2}(M-2) = \tilde{b}_u(\lfloor (M-2)/2 \rfloor)$

$e^{j(2\pi n(N-1)/N)}$    $P_{u,2}(M-1) = b_u(\lfloor (M-1)/2 \rfloor)$

$e^{j(2\pi n(0)/N)}$    Null (DC)

frequency domain signal

$e^{j(2\pi n(1)/N)}$    $P_{u,2}(M+0) = b_u(M-1-\lfloor 0/2 \rfloor)$

$e^{j(2\pi n(2)/N)}$    $P_{u,2}(M+1) = \tilde{b}_u(M-1-\lfloor 1/2 \rfloor)$

$\vdots$

$e^{j(2\pi n(M-2)/N)}$    $P_{u,2}(M+M-3) = b_u(M-1-\lfloor (M-3)/2 \rfloor)$

$e^{j(2\pi n(M-1)/N)}$    $P_{u,2}(M+M-2) = \tilde{b}_u(M-1-\lfloor (M-2)/2 \rfloor)$

$e^{j(2\pi n(M)/N)}$    $P_{u,2}(M+M-1) = b_u(M-1-\lfloor (M-1)/2 \rfloor)$

Null

$e^{j(2\pi n(N/2-1)/N)}$

【FIG. 8A】

| $m = -\frac{N}{2}$ | $\exp(-j2\pi n\frac{N}{2}/N)$ |
|---|---|
| $m = -\frac{N}{2} + 1$ | $\exp(-j2\pi n(\frac{N}{2}-1)/N)$ |
| $\vdots$ | $\vdots$ |
| $m = -1$ | $\exp(-j2\pi n/N)$ |
| $m = 0$ | $1$ |
| $m = 1$ | $\exp(j2\pi n/N)$ |
| $\vdots$ | $\vdots$ |
| $m = \frac{N}{2} - 1$ | $\exp(j2\pi n(\frac{N}{2}-1)/N)$ |

【FIG. 8B】

| | $n = 1$ | $n = 2$ | $n = 3$ | $n = 4$ | |
|---|---|---|---|---|---|
| $m = -\frac{N}{2}$ | | | $-C$ | $D$ | |
| | | $B$ | | $-D$ | |
| $\vdots$ | $-A$ | | $C$ | $D$ | |
| | | $-B$ | $-C$ | $-D$ | |
| $m = -1$ | | | | $D$ | $\cdots$ |
| $m = 0$ | | | $C$ | | |
| $m = 1$ | | $B$ | | $-D$ | |
| | $A$ | | $-C$ | $D$ | |
| $\vdots$ | | $-B$ | $C$ | $-D$ | |
| $m = \frac{N}{2} - 1$ | | | | | |

【FIG. 9A】

| |
|---|
| $b_u(0) = 1$ |
| $b_u(1)$ |
| $\vdots$ |
| $b_u((M-1)/2-1)$ |
| $b_u((M-1)/2)$ |
| $b_u((M-1)/2+1)$ |
| $\vdots$ |
| $b_u(M-2)$ |
| $b_u(M-1) = 1$ |

$M$

$= \cdots = \; =$

【FIG. 9B】

| |
|---|
| $b_u(0) = s(0)$ |
| $b_u(1) = s(1)$ |
| $\vdots$ |
| $b_u((M-1)/2-1) = s((M-1)/2-1)$ |
| $b_u((M-1)/2) = s((M-1)/2)$ |
| $b_u((M-1)/2+1) = s((M-1)/2-1)$ |
| $\vdots$ |
| $b_u(M-2) = s(1)$ |
| $b_u(M-1) = s(0)$ |

$M$

$= \cdots = \; =$

【FIG. 9C】

$b_u(0) = s(0)$

$b_u(1) = s(1)$

$\vdots$

$b_u((M-1)/2-1) = s((M-1)/2-1)$

$b_u((M-1)/2) = s((M-1)/2)$

$b_u((M-1)/2+1) = -s((M-1)/2-1)$

$\vdots$

$b_u(M-2) = -s(1)$

$b_u(M-1) = -s(0)$

$M$

$x(-1) \cdots x(-1) \quad x(-1)$

【FIG. 10】

N-point IFFT element
$\exp\{j2\pi nk/N\}, 0 \le k < N$

third radio signal
$P_{u,3}(m), 0 \le m < 2M$

subcarrier

$e^{j(2\pi n(N/2)/N)}$

⋮

Null

$e^{j(2\pi n(N-M)/N)}$

$P_{u,3}(0) = b_u(\lfloor 0/2 \rfloor)$

$e^{j(2\pi n(N-M+1)/N)}$

$P_{u,3}(1) = \bar{b}_u(\lfloor 1/2 \rfloor)$

⋮

⋮

$e^{j(2\pi n(N-3)/N)}$

$P_{u,3}(M-3) = b_u(\lfloor (M-3)/2 \rfloor)$

$e^{j(2\pi n(N-2)/N)}$

$P_{u,3}(M-2) = \bar{b}_u(\lfloor (M-2)/2 \rfloor)$

$e^{j(2\pi n(N-1)/N)}$

$P_{u,3}(M-1) = b_u(\lfloor (M-1)/2 \rfloor)$

frequency
domain
signal

$e^{j(2\pi n(0)/N)}$

Null (DC)

$e^{j(2\pi n(1)/N)}$

$P_{u,3}(M+0) = b_u(\lfloor 0/2 \rfloor)$

$e^{j(2\pi n(2)/N)}$

$P_{u,3}(M+1) = \bar{b}_u(M-1-\lfloor 1/2 \rfloor)$

⋮

⋮

$e^{j(2\pi n(M-2)/N)}$

$P_{u,3}(M+M-3) = b_u(\lfloor (M-3)/2 \rfloor)$

$e^{j(2\pi n(M-1)/N)}$

$P_{u,3}(M+M-2) = \bar{b}_u(M-1-\lfloor (M-2)/2 \rfloor)$

$e^{j(2\pi n(M)/N)}$

$P_{u,3}(M+M-1) = b_u(\lfloor (M-1)/2 \rfloor)$

⋮

Null

$e^{j(2\pi n(N/2-1)/N)}$

⋮

## INTERNATIONAL SEARCH REPORT

| | International application No. |
| --- | --- |
| | **PCT/KR2022/020993** |

**A. CLASSIFICATION OF SUBJECT MATTER**

**H04L 27/26**(2006.01)i; **H04J 11/00**(2006.01)i; **H04J 13/00**(2011.01)i; **H04W 56/00**(2009.01)i

According to International Patent Classification (IPC) or to both national classification and IPC

**B. FIELDS SEARCHED**

Minimum documentation searched (classification system followed by classification symbols)

H04L 27/26(2006.01); H04B 7/26(2006.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1 시퀀스(first sequence), 제2 시퀀스(second sequence), 신호 시퀀스(signal sequence), 변조(modulation), 엘리먼트 그룹(element group), 오름차순(ascending order), 내림차순(descending order)

**C. DOCUMENTS CONSIDERED TO BE RELEVANT**

| Category* | Citation of document, with indication, where appropriate, of the relevant passages | Relevant to claim No. |
| --- | --- | --- |
| X | US 2020-0383074 A1 (ELECTRONICS AND TELECOMMUNICATIONS RESEARCH INSTITUTE) 03 December 2020 (2020-12-03) See paragraphs [0084], [0107]-[0111] and [0158]-[0160]; claims 2-3; and figures 5 and 11. | 1-18 |
| A | KR 10-2010-0003770 A (SAMSUNG ELECTRONICS CO., LTD.) 12 January 2010 (2010-01-12) See paragraphs [0061]-[0064]; and figure 9. | 1-18 |
| A | EP 2871894 A1 (HUAWEI TECHNOLOGIES CO., LTD.) 13 May 2015 (2015-05-13) See paragraphs [0094]-[0103]; and figure 1. | 1-18 |
| A | WO 2014-088659 A1 (INTEL CORPORATION) 12 June 2014 (2014-06-12) See paragraphs [0042]-[0057]; and figure 2. | 1-18 |
| A | KR 10-2021-0107588 A (ELECTRONICS AND TELECOMMUNICATIONS RESEARCH INSTITUTE) 01 September 2021 (2021-09-01) See paragraphs [0030]-[0033]; and figure 2. | 1-18 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 April 2023** | **20 April 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
**Information on patent family members**

</div>

| | International application No. |
|---|---|
| | **PCT/KR2022/020993** |

| Patent document cited in search report | | | Publication date (day/month/year) | Patent family member(s) | | | Publication date (day/month/year) |
|---|---|---|---|---|---|---|---|
| US | 2020-0383074 | A1 | 03 December 2020 | KR | 10-2020-0136326 | A | 07 December 2020 |
| | | | | KR | 10-2023-0005799 | A | 10 January 2023 |
| | | | | KR | 10-2483481 | B1 | 30 December 2022 |
| | | | | US | 11140646 | B2 | 05 October 2021 |
| KR | 10-2010-0003770 | A | 12 January 2010 | None | | | |
| EP | 2871894 | A1 | 13 May 2015 | CN | 103782641 | A | 07 May 2014 |
| | | | | CN | 103782641 | B | 28 December 2018 |
| | | | | CN | 109831285 | A | 31 May 2019 |
| | | | | CN | 109831286 | A | 31 May 2019 |
| | | | | CN | 109831286 | B | 09 November 2021 |
| | | | | CN | 109873690 | A | 11 June 2019 |
| | | | | CN | 109873690 | B | 14 January 2022 |
| | | | | EP | 2871894 | A4 | 27 May 2015 |
| | | | | EP | 2871894 | B1 | 19 September 2018 |
| | | | | EP | 3499782 | A1 | 19 June 2019 |
| | | | | EP | 3499782 | B1 | 28 July 2021 |
| | | | | EP | 3890234 | A1 | 06 October 2021 |
| | | | | KR | 10-1679313 | B1 | 24 November 2016 |
| | | | | KR | 10-2015-0038514 | A | 08 April 2015 |
| | | | | RU | 2598533 | C1 | 27 September 2016 |
| | | | | TR | 201818935 | T4 | 21 January 2019 |
| | | | | US | 10271323 | B2 | 23 April 2019 |
| | | | | US | 10785765 | B2 | 22 September 2020 |
| | | | | US | 2015-0156752 | A1 | 04 June 2015 |
| | | | | US | 2017-0311298 | A1 | 26 October 2017 |
| | | | | US | 2019-0230636 | A1 | 25 July 2019 |
| | | | | US | 9674827 | B2 | 06 June 2017 |
| | | | | WO | 2014-019181 | A1 | 06 February 2014 |
| | | | | WO | 2014-019286 | A1 | 06 February 2014 |
| WO | 2014-088659 | A1 | 12 June 2014 | CN | 104756418 | A | 01 July 2015 |
| | | | | CN | 104756418 | B | 20 October 2017 |
| | | | | CN | 104770048 | A | 08 July 2015 |
| | | | | CN | 104770048 | B | 07 September 2018 |
| | | | | EP | 2929632 | A1 | 14 October 2015 |
| | | | | EP | 2929632 | A4 | 31 August 2016 |
| | | | | EP | 2929727 | A1 | 14 October 2015 |
| | | | | EP | 2929727 | A4 | 20 July 2016 |
| | | | | US | 2014-0254567 | A1 | 11 September 2014 |
| | | | | US | 2014-0269419 | A1 | 18 September 2014 |
| | | | | US | 2015-0009867 | A1 | 08 January 2015 |
| | | | | US | 2015-0289282 | A1 | 08 October 2015 |
| | | | | US | 9282564 | B2 | 08 March 2016 |
| | | | | US | 9516659 | B2 | 06 December 2016 |
| | | | | US | 9674847 | B2 | 06 June 2017 |
| | | | | WO | 2014-088676 | A1 | 12 June 2014 |
| | | | | WO | 2014-088688 | A1 | 12 June 2014 |
| | | | | WO | 2014-089093 | A1 | 12 June 2014 |
| KR | 10-2021-0107588 | A | 01 September 2021 | CN | 102598613 | A | 18 July 2012 |
| | | | | CN | 102598613 | B | 06 January 2016 |
| | | | | EP | 2472810 | A2 | 04 July 2012 |

Form PCT/ISA/210 (patent family annex) (July 2022)

INTERNATIONAL SEARCH REPORT
Information on patent family members

| International application No. |
| --- |
| **PCT/KR2022/020993** |

| Patent document cited in search report | Publication date (day/month/year) | Patent family member(s) | | Publication date (day/month/year) |
| --- | --- | --- | --- | --- |
| | | EP | 2472810 A4 | 12 February 2014 |
| | | EP | 2472810 B1 | 01 March 2023 |
| | | KR | 10-1653007 B1 | 01 September 2016 |
| | | KR | 10-1761895 B1 | 26 July 2017 |
| | | KR | 10-2011-0021672 A | 04 March 2011 |
| | | KR | 10-2016-0106016 A | 09 September 2016 |
| | | KR | 10-2017-0088802 A | 02 August 2017 |
| | | KR | 10-2018-0069764 A | 25 June 2018 |
| | | KR | 10-2019-0046743 A | 07 May 2019 |
| | | KR | 10-2020-0111145 A | 28 September 2020 |
| | | KR | 10-2296257 B1 | 01 September 2021 |
| | | KR | 10-2408737 B1 | 14 June 2022 |
| | | US | 10277443 B2 | 30 April 2019 |
| | | US | 10484221 B2 | 19 November 2019 |
| | | US | 10972325 B2 | 06 April 2021 |
| | | US | 2012-0219077 A1 | 30 August 2012 |
| | | US | 2018-0159708 A1 | 07 June 2018 |
| | | US | 2020-0084077 A1 | 12 March 2020 |
| | | US | 2021-0226831 A1 | 22 July 2021 |
| | | WO | 2011-025198 A2 | 03 March 2011 |
| | | WO | 2011-025198 A3 | 07 July 2011 |

Form PCT/ISA/210 (patent family annex) (July 2022)